# EUROPEAN PATENT SPECIFICATION

(11) **EP 3 739 570 B1**
(45) Date of publication and mention of the grant of the patent: **19.03.2025**
(21) Application number: 19175238.5
(22) Date of filing: 17.05.2019
(51) Int. Cl.: G06F 40/40, G10L 13/02, G10L 15/26

(54) **ATTENTION-BASED NEURAL SEQUENCE TO SEQUENCE MAPPING APPLIED TO SPEECH SYNTHESIS AND VOCAL TRANSLATION**
ATTENTION-BASIERTES NEURALES NETZWERK ZUR VERARBEITUNG VON SEQUENZENMAPPING, ANGEWANDT AUF SPRACHSYNTHESE UND ÜBERSTETZUNG
TRAITEMENT DE SÉQUENCE À SÉQUENCE AVEC UN MODÈLE NEURONAL BASÉ SUR L'ATTENTION, APPLIQUÉ À LA SYNTHÈSE DE LA PAROLE ET À LA TRADUCTION VOCALE

(43) Date of publication of application: 18.11.2020
(73) Proprietor: Papercup Technologies Limited, London N1 6DZ (GB)
(72) Inventor: GAO, Jiameng, London, EC1V 1AZ (GB); STAIB, Marlene Vera Stefanie, London, EC1V 1AZ (GB)
(74) Representative: Marks & Clerk LLP

(56) References cited:
- US-A1- 2018 336 880
- YUXUAN WANG ET AL: "Tacotron: Towards End-to-End Speech Synthesis", INTERSPEECH 2017, 2017, ISCA, pages 4006 - 4010, XP055633013, DOI: 10.21437/Interspeech.2017-1452
- JOSE SOTELO ET AL: "Workshop track -ICLR 2017 CHAR2WAV: END-TO-END SPEECH SYNTHESIS", 10 March 2017 (2017-03-10), XP055481275, Retrieved from the Internet <URL:https://pdfs.semanticscholar.org/9203/d6c076bffe87336f2ea91f5851436c02dbe6.pdf> [retrieved on 20180605]
- THANG LUONG ET AL: "Effective Approaches to Attention-based Neural Machine Translation", PROCEEDINGS OF THE 2015 CONFERENCE ON EMPIRICAL METHODS IN NATURAL LANGUAGE PROCESSING, 17 September 2015 (2015-09-17), Stroudsburg, PA, USA, pages 1412 - 1421, XP055435303, DOI: 10.18653/v1/D15-1166
- RJ SKERRY-RYAN ET AL: "Towards End-to-End Prosody Transfer for Expressive Speech Synthesis with Tacotron", ARXIV.ORG, CORNELL UNIVERSITY LIBRARY, 201 OLIN LIBRARY CORNELL UNIVERSITY ITHACA, NY 14853, 24 March 2018 (2018-03-24), XP080862501
- TOM LE PAINE ET AL: "Fast Wavenet Generation Algorithm", ARXIV.ORG, CORNELL UNIVERSITY LIBRARY, 201 OLIN LIBRARY CORNELL UNIVERSITY ITHACA, NY 14853, 29 November 2016 (2016-11-29), XP080735492

## Description

### FIELD

The present invention relates to a computer implemented method of sequence to sequence data processing, and a system for sequence to sequence data processing.

### BACKGROUND

Sequence to sequence data processing methods may be used in various applications. For example, a text to speech system receives a sequence of text related units as input (such as a sequence of phones) and performs processing to output a sequence of audio frames. Other examples of sequence to sequence data processing include speech processing systems, such as speech based machine translation systems; text processing systems, such as text based machine translation systems, natural language processing tasks (for example part of speech tagging or named entity recognition), relation extraction, parsing, or semantic role labelling; or image processing systems, such as image captioning systems for example. In many such systems, information relating to the alignment relationship between the input and output data sequence is generated, and used to produce the output data sequence. There is a continuing need to improve such systems.

Yuxuan Wang et al: "Tacotron: Towards End-to-End Speech Synthesis", Interspeech 2017, describes an end-to-end generative text -to-speech model that synthesizes speech directly from characters.

Jose Sotelo et al: "Workshop track-ICLR 2017 CHAR2WAV: END-TO-END SPEECH SYNTHESIS", 10 March 2017, describes an end-to-end model for speech synthesis comprising a reader and a neural vocoder.

Thang Luong et al: "Effective Approaches to Attention-based Neural Machine Translation", Proceedings of the 2015 conference on empirical methods in natural language processing, 17 September 2015 describes two classes of attentional mechanism: a global approach which always tends to all source words and a local one that only looks at a subset of source words at a time.

### BRIEF DESCRIPTION OF FIGURES

Systems and methods will now be described with reference to the accompanying figures in which:
Figure 1 shows a schematic illustration of a system for sequence to sequence data processing in accordance with an embodiment;
Figure 2(a) shows a flow chart illustrating functional modules of a text to speech processor used in a first stage of a method according to an embodiment;
Figure 2(b) shows a flow chart illustrating the functional modules of the modified text to speech processor used in a second stage of the method according to an embodiment;
Figure 2(c) shows a flow chart of the steps performed in a first stage of a method according to an embodiment;
Figure 2(d) shows a flow chart of the steps performed in a second stage of the method according to an embodiment;
Figure 2(e) shows a schematic illustration of a weight value generated for each of a plurality of representational vectors using an index and an example probability distribution;
Figure 2(f) is a schematic illustration of a process of generating an alignment feature using an attention network performed as part of a method according to an embodiment;
Figure 3(a) shows a method according to an embodiment, in which a candidate input is detected by a user and a process to improve the alignment of the output performed;
Figure 3(b) shows a method in which a candidate is detected automatically and the process performed automatically in response to detection of a candidate;
Figure 4(a) is a schematic illustration of an example alignment map;
Figure 4(b) shows an example of a successful alignment map;
Figure 4(c) shows an example of a failed alignment map;
Figure 5(a) shows a schematic illustration of an example method of training a speech synthesis system;
Figure 5(b) is a schematic illustration of an example of a computational graph for a simple function;
Figure 5(c) is a schematic illustration of a simple computational graph unfolded through time;
Figure 6(a) shows a flow chart illustrating the processing stages included in a speech processing system
Figure 6(b) shows a flow chart of the steps performed in a speech processing method in accordance with an embodiment;
Figure 6(c) shows a schematic illustration of a speaker characteristic adaptation module which may be used in a method
Figure 7(a) shows a flow chart of an example method of training a system to generate speaker vectors;
Figure 7(b) shows a flow chart of an alternative example method of training a system to generate speaker vectors;
Figure 8 is a flow chart of an example method of training a speech signal processing system to generate translated speech.

### DETAILED DESCRIPTION

According to an embodiment, there is provided a computer implemented method of sequence to sequence data processing, comprising:
inputting a first input comprising a first input data sequence into a model, the model outputting a first output data sequence, a first part of the model generating an intermediate state comprising information relating to an alignment relationship between the first input data sequence and the first output data sequence, the intermediate state being used in the model to generate the first output data sequence wherein the first input data sequence comprises a sequence of text related units, and the first output data sequence comprises a sequence representing audio frames;
storing the intermediate state;
modifying the model to replace the first part with the stored intermediate state;
inputting a second input comprising a second input data sequence into the modified model, the modified model outputting a second output data sequence using the intermediate state, wherein the first input data sequence has the same length as the second input data sequence and wherein the first input has the same dimensions as the second input, and wherein the second input data sequence comprises a sequence of text related units, and the second output data sequence comprises a sequence representing audio frames.

In the method, information relating to the alignment relationship between the input and output data sequence is generated, and used to produce the output data sequence. This information impacts the quality of the output data sequence.

The disclosed systems and methods address a technical problem tied to computer technology and arising in the realm of computer networks, namely the technical problem of inefficient use of computational resources. The disclosed systems and methods solve this technical problem by storing an intermediate state generated by a first part of a model when a first input comprising a first input data sequence is taken, and modifying the model to replace the first part with the stored intermediate state before a second input is taken. In this way, the first part of the model is not performed for the second input, meaning that fewer operations are performed and therefore less computational resources are required. Furthermore, by using alignment information generated for the first input, improvement in the robustness of the alignment can be obtained for the second input.

The method comprises transferring of an intermediate state, or part of a state, from a model run with one input to that run with a different input, during inference. The intermediate state may be a state that changes with each item in the input and/or output sequence.

In an embodiment, the method is an audio signal processing method (for example a speech processing method), or a text processing method.

The input data sequence comprises a sequence of text related units, such as a sequence of phones, and the output data sequence comprises a sequence representing audio frames.

The input data sequence may be converted into a further data sequence, which is in turn converted into the output data sequence.

In an embodiment, the method is a method of processing The method may be for processing a speech signal to generate translated speech, in which an input speech signal in a source language is converted into a text signal in a target language, which is then used to generate a speech signal in a target language. The method may comprise inputting a first speech signal comprising a second language; generating a first text signal from a segment of the first speech signal, the first text signal comprising the second language; generating a second text signal from the first text signal, the second text signal comprising a first language; and outputting a second speech signal comprising the first language, wherein the first input data sequence comprises information relating to the second text signal and the first input further comprises a speaker vector, wherein the speaker vector represents a set of features corresponding to a speaker, and wherein the first output data sequence comprises a second speech signal segment comprising the first language. The method may further comprise extracting a plurality of first feature vectors from the segment of the first speech signal, wherein the first feature vectors comprise information relating to audio data corresponding to the segment of the first speech signal; and generating the speaker vector using a trained algorithm taking one or more of the first feature vectors as input.

In an embodiment, the input data sequence comprises a sequence of text related units and the output data sequence comprises a sequence representing speech frames. The sequence of text related units is extracted from an input text signal and an output speech signal is generated from the sequence representing speech frames. The input text signal may in turn be generated using an input speech signal in a different language for example.

The input data sequence comprises a sequence of text related units, such as a sequence of phones.

In an embodiment, the first part of the model comprises a first trained algorithm. The first trained algorithm may be configured to generate a first set of parameters representing an alignment relationship between the first input data sequence and the first output data sequence, and wherein modifying the model comprises replacing the first trained algorithm with the stored first set of parameters. The first trained algorithm may comprise an attention mechanism.
the first input further comprises a first characteristic vector and the second input further comprises a second characteristic vector. The first characteristic vector comprises a set of features corresponding to a first speaker and the second characteristic vector comprises a set of features corresponding to a second speaker. first input data sequence and the second input data sequence are the same, and the first characteristic vector and second characteristic vector are different. Alternatively, the first input data sequence and the second input data sequence are different, and the first characteristic vector and second characteristic vector are the same. Alternatively, the first input data sequence and the second input data sequence are different, and the first characteristic vector and second characteristic vector are different. the first characteristic vector further comprises a set of features corresponding to a first language and the second characteristic vector further comprises the set of the features corresponding to a second language. the first language and the second language are the same. Alternatively, the first language and the second language are different. an input to the first part of the model for a current time step comprises information generated from a previous time step.

The model may further comprise a first neural network, wherein the first trained algorithm is configured to, for a current time step, receive the output of the first neural network for one or more previous time steps, wherein the first set of parameters for the current time step is generated using the output of the first trained algorithm.

The model may be further configured to, for a current time step, generate a weighted combination of the text related units, wherein the weights are generated from the output of the first trained algorithm for the current time step; and wherein the input to the first neural network is generated from the weighted combination.

The first input may further comprise a first characteristic vector and the second input further comprises a second characteristic vector, wherein the input to the first neural network is further generated from the characteristic vector, wherein the processor is further configured to:
take the output of the first neural network for the current time step and one or more previous time steps as input to a second neural network, wherein the second neural network outputs the audio feature vector for the current time step.

In an embodiment, the method further comprises inputting the second input into the model comprising the first part, the model outputting a third output data sequence; and identifying that the second input is a candidate for improving alignment.

Identifying that the second input is a candidate for improving alignment may comprise detecting a fault in the alignment relationship between the second input data sequence and the third output data sequence.

In an embodiment, detecting a fault comprises:
extracting a set of parameters generated using a first trained algorithm when the second input data sequence is inputted, the set of parameters representing an alignment relationship between the second input data sequence and the third output data sequence;
inputting features generated from the set of parameters into a fault detection classifier.

The method may iterate until a first input is identified for which the alignment relationship is robust.

The first input may be generated by adding a noise term to the second input.

The method for correcting failures improves the robustness of systems such as sequence-to-sequence networks used in speech synthesis, where the systems may fail to generate the speech of whole parts of an input sequence.

The methods are computer-implemented methods. Since some methods in accordance with embodiments can be implemented by software, some embodiments encompass computer code provided to a general purpose computer on any suitable carrier medium. The carrier medium can comprise any storage medium such as a floppy disk, a CD ROM, a magnetic device or a programmable memory device, or any transient medium such as any signal e.g. an electrical, optical or microwave signal. The carrier medium may comprise a non-transitory computer readable storage medium.

According to an embodiment, there is provided a carrier medium comprising computer readable code configured to cause a computer to perform any of the above methods.

According to an embodiment, there is provided a system for sequence to sequence data processing, comprising:
an input;
an output;
a memory; and
a processor configured to:
   input a first input comprising a first input data sequence into a model, the model outputting a first output data sequence, a first part of the model generating an intermediate state comprising information relating to an alignment relationship between the first input data sequence and the first output data sequence, the intermediate state being used in the model to generate the first output data sequence, wherein the first input data sequence (101) comprises a sequence of text related units and the first output data sequence comprises a sequence representing audio frames;
   store the intermediate state in the memory;
   modify the model to replace the first part with the stored intermediate state;
   input a second input comprising a second input data sequence into the modified model, the modified model outputting a second output data sequence using the intermediate state, wherein the first input data sequence has the same length as the second input data sequence and wherein the first input has the same dimensions as the second input, and wherein, the second input data sequence comprises a sequence of text related units, and the second output data sequence comprises a sequence representing audio frames.

In an embodiment, the system is an audio signal processing system (for example a speech processing system), or a text processing system.

The system may be a speech processing system, for generating translated speech. The input comprises an input for receiving a first speech signal comprising a second language, and the output comprises an output for outputting a second speech signal comprising a first language. The processor is further configured to generate a first text signal from a segment of the first speech signal, the first text signal comprising the second language; generate a second text signal from the first text signal, the second text signal comprising the first language; wherein the first input data sequence comprises information relating to the second text signal and the first input further comprises a speaker vector, wherein the speaker vector represents a set of features corresponding to a speaker, and wherein the first output data sequence comprises a second speech signal segment comprising the first language. The processor may be further configured to extract a plurality of first feature vectors from the segment of the first speech signal, wherein the first feature vectors comprise information relating to audio data corresponding to the segment of the first speech signal; and generate the speaker vector using a trained algorithm taking one or more of the first feature vectors as input.

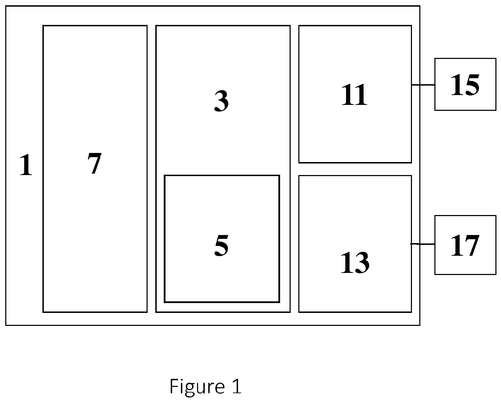

Figure 1 shows a schematic illustration of a system for processing an input data sequence in accordance with an embodiment.

The system 1 comprises a processor 3 which takes an input data sequence and outputs an output data sequence. For example, the input data sequence may comprise text and the output data sequence may comprise speech. The input data sequence may be converted into a further data sequence, which is in turn converted into the output data sequence. For example, an input speech signal in a source language is converted into a text signal in a target language, which is then used to generate a speech signal in a target language.

A computer program 5 is stored in non-volatile memory. The non-volatile memory is accessed by the processor and the stored code is retrieved and executed by the processor 3. The processor may comprise logic circuitry that responds to and processes the program instructions. The storage 7 stores data that is used by the program 5.

The system 1 further comprises an input module 11 and an output module 13. The input module 11 is connected to an input 15 for receiving the input data sequence. The input 15 may be a receiver for receiving data from an external storage medium or a network. Alternatively, the input 15 may comprise hardware such as a microphone or keyboard. Alternatively, the input 15 may read data from a stored file, for example a stored text, audio or video file, which may be stored on the system or on a separate storage medium such as a floppy disk, a CD ROM, a magnetic device or a programmable memory device.

Connected to the output module 13 is output 17. The output 17 may comprise hardware, such as a speaker or screen. Alternatively, the output may be a transmitter for transmitting data to an external storage medium or a network. Alternatively, the output 17 may write data in a stored text, audio or video file, which may be stored on the system or on a separate storage medium such as a floppy disk, a CD ROM, a magnetic device or a programmable memory device.

In an embodiment, the system 1 may be located in a common system with hardware for inputting and outputting speech signals. Alternatively, the system 1 may be a remote system 1, which receives input data through a communication network, and transmits output data through the communication network. For example, the system may be implemented on a cloud computing system, which receives and transmits data.

Although in the described system, a single processor 3 is used, the system may comprise two or more processors configured to perform different parts of the processing and transmit data between them. For example, all of the model matrix multiplications and gradient calculations may be performed on a GPU, whilst some additional processing such as loading data, saving model weights, and running the robustness classifier may be performed on a CPU.

In use, the system 1 receives data through data input 15. The program 5, executed on processor 3, outputs data through the output 17 in the manner which will be described with reference to the following figures. The processor may comprise logic circuitry that responds to and processes the program instructions.

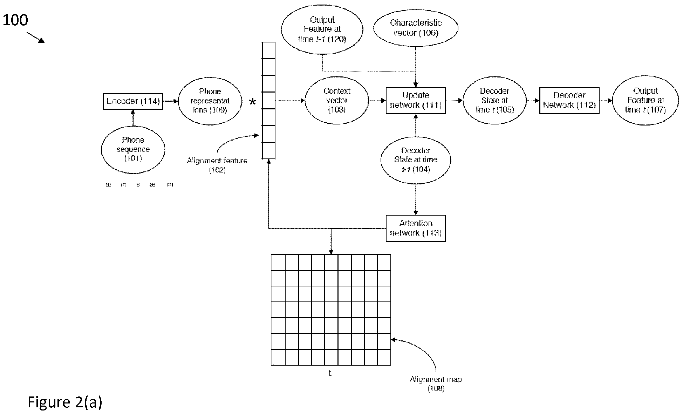

Figure 2(a) shows a flow chart illustrating functional modules of a text to speech processor 100 used in a first stage of a method according to an embodiment. A text to speech processing method is described as an example of a sequence to sequence data processing method. A speech to speech processing method is described as an example of another sequence to sequence processing method.

The input comprises a first input data sequence which in this case is a sequence of phones 101. The input further comprises a characteristic vector 106 which will be described later. The input is processed by the text to speech model 100 which comprises an encoder 114, an update network 111, an attention network 113 and a decoder network 112. The components of the model 100 and their functions will be described in detail below. The model outputs a first output data sequence, comprising the output audio features 107.

The model generates alignment features 102 which are used to generate the first output data sequence in the manner described below. The alignment features can be considered to be an intermediate state. The alignment features 102 from each time step can be combined to form an alignment map 106, in which each column corresponds to a time step (an output audio frame) and each row corresponds to an entry in the input data sequence (in this case a phone). The alignment features 102 from each time step are stored.

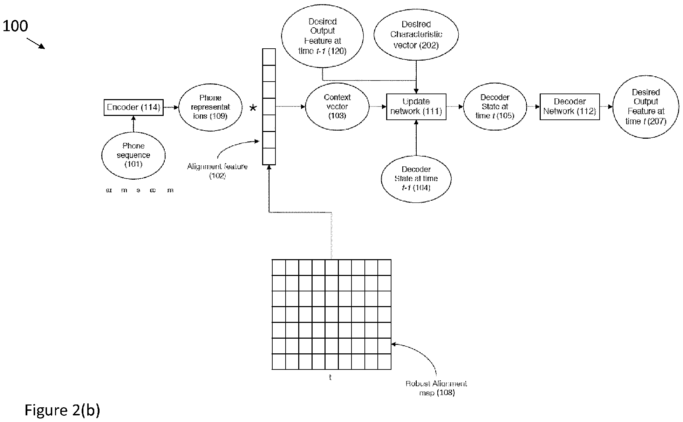

Figure 2(b) shows a flow chart illustrating the functional modules of the modified text to speech processor 100 used in a second stage of the method according to an embodiment. In the second stage, the model is modified to replace the attention network 113 with the stored alignment features 102 from the first stage. The input to the second stage is a second input comprising the same input data sequence and a different characteristic vector 202. The modified model outputs a second output data sequence comprising the output features 207 using the stored alignment features 102.

It is noted that in the above described example, the alignment features 102 from the first stage of the method and stored for use in the second stage of the method. However, alternative intermediate states comprising alignment information may be stored and used instead of the alignment features. For example, as will be described below, the context vectors 103 from the first stage of the method can alternatively be extracted and used in the second stage of the method in this case. They are generated prior to the combination with the new characteristic vector 106 in this example and also contain the alignment information.

The characteristic vectors comprise features from a speaker vector, being a set of features corresponding to a speaker. The characteristic vectors may further comprise features from a language vector, which will be described in more detail below.

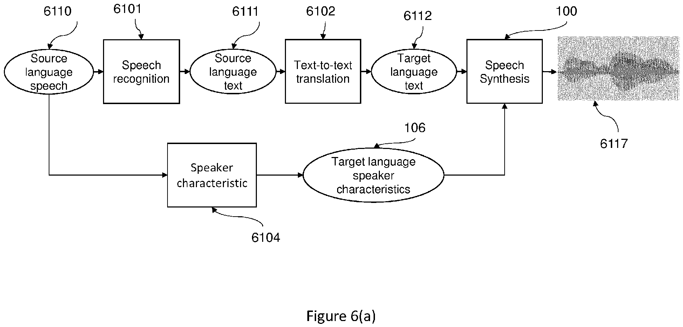

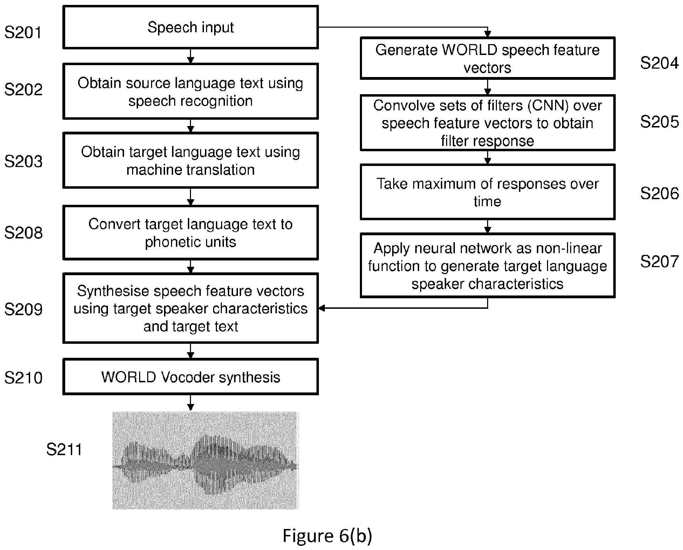

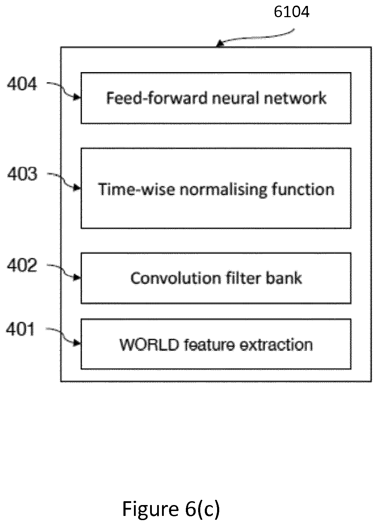

Information relating to speaker characteristics, such as accent, tone, pitch or emotions is contained in the characteristic vectors. A trained algorithm may be used to generate a characteristic vector for each new input utterance. This will be described below in relation to Figure 6. Alternatively, a model trained using unlabelled data may be used to extract an I-vector. Alternatively, an algorithm which isn't a trained model may be used to extract a characteristic vector for each new input utterance, for example by extracting summary statistics (mean, standard deviation) on the features of that speaker (e.g. fundamental frequency). Alternatively, the characteristic vectors may be retrieved from a stored look-up table comprising a plurality of characteristic vectors. The characteristic vectors in the look-up table may be generated during training of the system 100, which will be described in detail below, and stored in a look-up table corresponding to a speaker ID. A user may initially input their speaker ID, which is used to retrieve a stored characteristic vector corresponding to the user. Alternatively, the user may select a stored characteristic vector which corresponds to a speaker with similar or desired attributes, or may input attributes allowing a stored characteristic vector to be selected, for example gender, age, speed etc. Alternatively, a combined approach may be used, in which a characteristic vector is generated the first time a new user uses the system, using the trained algorithm. The generated characteristic vector is then stored and retrieved for subsequent use.

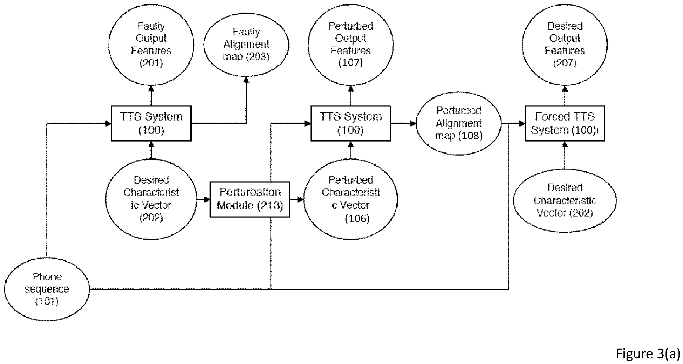

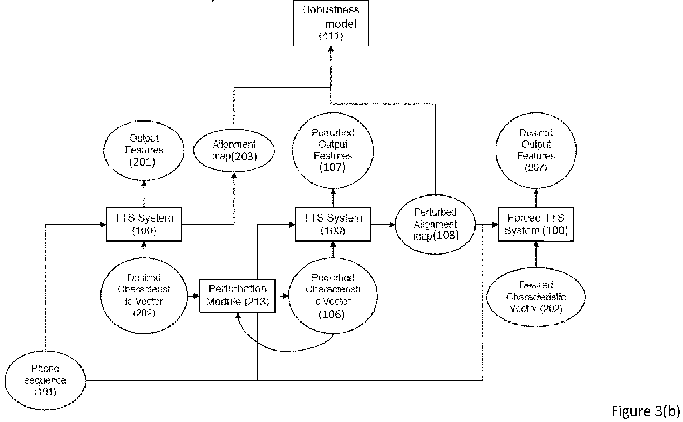

The characteristic vector 106 used in the first stage may be a modified version of a desired characteristic vector 202 used in the second stage. This will be described in more detail in relation to Figure 3.

In this example, the characteristic vector is changed between the first stage and in the second stage. Thus during the first stage, a first input data sequence and a first characteristic vector are taken as input, and during the second stage, the first input data sequence and a second, different, characteristic vector is taken as input. Alternatively however, some other change to the input may be made between stages. For example, in the first stage, a first input data sequence and a first characteristic vector are taken as input, and during the second stage, a second, different input data sequence and the first characteristic vector is taken as input. In both cases, the input data sequence during the first stage has the same length as the input data sequence during the second stage. Optionally, the input during the first stage has the same dimensions as the input during the second stage.

It is expected that, the more similar the inputs during the first stage are to the inputs during the second stage, the higher quality the output. For example, if the first input data sequence differs from the second input data sequence only by the replacement of one phone by a similar phone, it is expected that the output will be higher quality than a case where the phone is replaced by a less similar phone, or more than one phone is replaced by a different phone. This is because phones, in particular less similar phones, may have different durations. Optionally, the first input data sequence differs from the second input data sequence only by the replacement of one phone by another phone. To generate the second input data sequence, a step of changing or perturbing one of the phones such that the embedding vector is slightly different may be performed.

Similarly, it is expected that if the first characteristic vector is replaced by a second characteristic vector which is more similar to the first characteristic vector (e.g. the values are each changed by an amount which is less than 10%, or by an amount which is less than 0.5, or the speaker is known to be the same gender), the output will be higher quality. the first characteristic vector is replaced by a second characteristic vector which is selected from a set of stored characteristic vectors. The second characteristic vector is selected as the characteristic vector that is the closest to the first characteristic vector based on a distance measure, such as a Euclidean distance or a Manhattan distance for example.

In the example shown in the figures, an input text signal "I'm Sam" is first converted into a phone sequence 101. For example, a grapheme-to-phoneme converter (not shown) converts a text input (comprising a sequence of one or more words) into a sequence of phonetic units, for example units in the International Phonetic Alphabet. the grapheme-to-phoneme converter comprises a rule based algorithm. For the example text signal, there results a sequence of five phonetic units: a 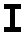 , m, s, æ, m.

An encoder 114 then converts the sequence of phonetic units to a sequence of representational vectors 109. The encoder 114 may comprise a look-up table for each phonetic unit and its corresponding embedding vector, a recurrent neural network, a convolutional neural network, or a combination of the above for example. the encoder 114 comprises a look-up table, where each phonetic unit is assigned a unique numerical integer corresponding to a row in the look-up table. The look up table comprises a 2D matrix of size V times H, where each integer corresponds to a row in the 2D matrix, where V is the total number of possible phonetic units and H is a fixed length. H = 128. The values in the 2D matrix may be learnt automatically during a training stage, and stored for use during implementation. The representational vector corresponding to an input phonetic unit is a vector of the values in the corresponding row. There is a one to one correspondence between the phonetic unit and the representational vector, thus where five phonetic units are inputted, five representational vectors are outputted.

Possibly the encoder 114 comprises the look-up table, however the sequence of vectors produced from the look-up table is then fed into a recurrent neural network. Thus the sequence of vectors corresponding to the text signal segment and produced from the look-up table are fed into a recurrent neural network (for example rolling in a left-to-right direction, vice versa, or both) where the output of the recurrent neural network is the sequence of representational vectors. The output sequence is of the same length as that output from the look-up table (thus in this example, five representational vectors). Alternatively the encoder 114 comprises the look-up table and a convolutional neural network, which convolves across the sequence of vectors output from the look-up table to produce a new sequence of vectors. In both cases, the vector of each phone unit is transformed whilst taking account of the surrounding phones around that phone unit, which may improve performance.

The attention network 113 comprises a feed-forward neural network, a recurrent neural network, or a combination of both for example. The attention mechanism 113 allows for a many-to-many mapping of lengths from the input to the output. In the described example, the attention mechanism 113 takes as input the decoder state from the previous time step (time t-1) 104. However, the attention mechanism 113 may be configured to use different features as input, for example one or more of: the previous attention vector 130, the encoder output, the output of the update network 111 for the previous time step, the output of the decoder network 112 for the previous time step, and the characteristic vector 106.

A context vector 103 is generated by taking a weighted sum of the encoder output vectors, with weights generated using the attention vector 130 output from the attention module 113 for the current time step. The weights are also referred to as alignment features 102, and are generated by taking the dot product of the attention vector 130 with each representational vector output from the encoder 114 in turn, which gives a sequence of scalars (one number corresponding to each representational vector). The weights are then used to generated the context vector 103, which is a weighted sum of the representational vectors. The context vector 103 thus has the same length as the representational vectors, H.

The update network 111 comprises a feed-forward neural network. The update network 111 takes as input the context vector 103, concatenated with the characteristic vector 106 and the output feature from the previous time step 120. The characteristic vector has length M. The output feature for a time step has length J. Thus the input to the update network 111 is a vector of length H + M + J.

Although in the described example, the characteristic vector 106 is taken as input to the update network 111, alternatively or additionally it may be input at one or more other stages in the model, for example it may be combined with the decoder state 105 and taken as input to the decoder network 112, or combined with the phone representations. For example, the characteristic vector 106 may alternatively be concatenated with each of the encoder outputs (i.e. each of the representational vectors), before the weighted sum is taken. In this manner, the characteristic vector can more directly influence the attention mechanism 113 to control aspects such as speed of pronunciation (controlled by how fast the attention weights scan through the input).

The update network 111 output for the time step is included in the decoder state 105.

The decoder network 112 takes as input the current decoder state 105, and outputs output audio feature vectors 107. The output feature vectors 107 may be taken as input to a vocoder (not shown). The process is repeated, for each output of the attention mechanism module, up to a maximum number, to generate a sequence of output feature vectors 107.

The decoder state 105 comprises S slots of feature vectors of dimension P. For example S is 20. P = 256. Each vector corresponds to the output from the update network 111 at a single time step. At each time step, the decoder state 105 shifts right by one, such that the last feature vector at position S is deleted, while a new feature vector is written into position 1. The decoder state 105 is initialised with zeros at the beginning of operation (t=0). The use of the decoder state 105 is optional, for example, the update network 111 and decoder network 112 can be replaced by a single left-to-right recurrent neural network (single or multi-layered).

Possibly the output feature vectors 107 are WORLD feature vectors. WORLD feature vectors are vector representations of an audio signal, i.e. spectrogram representations of the audio waveform which can be algorithmically converted back into speech. Each vector corresponds to a frame of the audio signal. The WORLD feature vectors may comprise spectral data SP and may further comprise information relating to one or more of the fundamental frequency F₀, aperiodicities BAP, and voice-unvoiced switch VUV. The aperiodicities BAP represent the size of impulse responses, as opposed to the harmonic spectrum represented by the spectral data SP. The voice-unvoiced switch VUV represents whether the sound is voiced (such as in cases of vowels), or unvoiced (such as consonants like "s" or "t"). The spectral data may be extracted using a number of frequency bins, for example greater than or equal to 60 As an example J is 63, and the output feature vector comprises, for each frame of the speech segment: one F₀ value, one VUV value, one BAP value and 60 spectral data values, for an audio sampling frequency of 16000Hz. As an example J is 67, and the first feature vector comprises, for each frame: one F₀ value, one VUV value, five BAP values and 60 spectral data values, for an audio sampling frequency of 48000Hz.

The sequence of output feature vectors 207 are converted into audio using an audio waveform synthesis module, i.e. a vocoder (not shown). Thus WORLD feature vectors may be converted into speech using a WORLD Vocoder for example. A WORLD vocoder comprises a deterministic algorithm that converts WORLD feature vectors into speech. Optionally, a convolutional neural network, such as Wavenet, may be used in place of the WORLD vocoder for example.

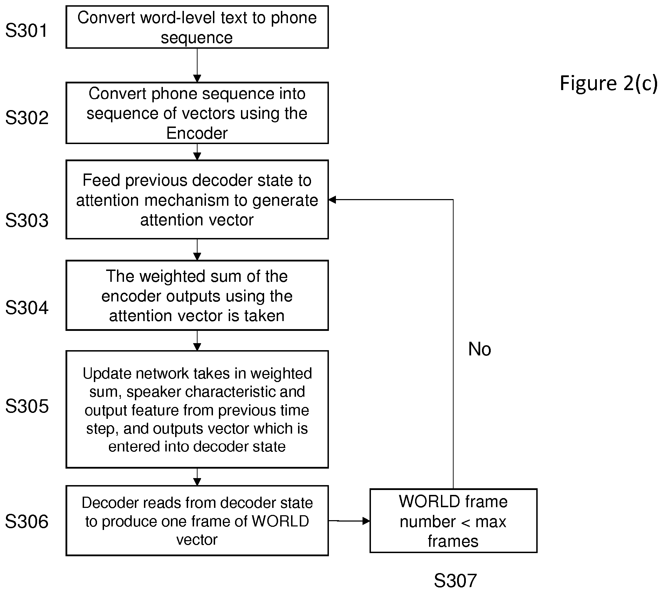

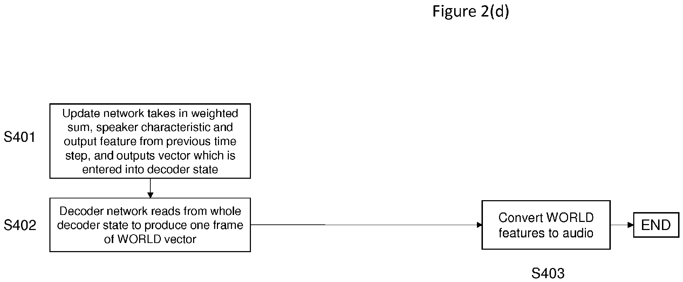

The operation of the attention network 113, the update network 111 and the decoder network 112 in the first and second stage is explained in further detail below in relation to Figures 2(c) and (d).

Figure 2(c) shows a flow chart of the steps performed in a first stage of a method according to an embodiment and Figure 2(d) shows a flow chart of the steps performed in a second stage of the method.

In step S301, text (for example, "I'm Sam") is converted to a phone sequence (in this case, a sequence of five phonetic units) by a grapheme-to-phoneme converter (not shown), as has been described above. The phone sequence is then converted into a sequence of representational vectors using the encoder 114 in step S302 (in this case, the five phonetic units are converted to five representational vectors), again, as has been described above.

In step S303, the attention mechanism 113 takes in the previous decoder state to generate an output attention vector 130 for the time step. In this step, a 1D vector (comprising the entries from all S vectors stored in the decoder state, flattened to an S*P length 1D vector) is fed into the attention mechanism 113, to generate an attention vector of length H. The attention mechanism 113 may comprise a feed-forward neural network. An example attention mechanism 113 comprises 2 layers of 128 units each. It produces an attention vector 130 of the same size H as the representational vectors.

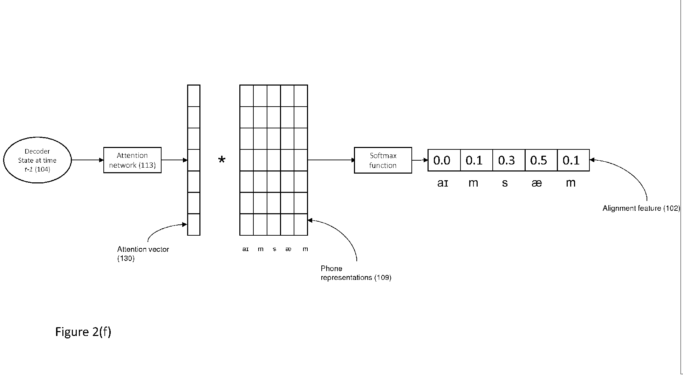

In step S304, a weighted sum of the representational vectors output from the encoder is taken, generating the context vector 103. The dot product of the attention vector 130 (of length H) with each representational vector 109 output from the encoder (each of length H) is first taken, which gives a sequence of scalars (one number corresponding to each representational vector). The softmax function is applied to this sequence, outputting a sequence of scalars with values between 0 and 1, also referred to as the alignment feature 102. These are the weights. Figure 2(f) is a schematic illustration of the process of generating the alignment feature 102 from the attention vector 130.

In step S304, each representational vector is then multiplied by its corresponding weight in the alignment feature 102, and the resulting weighted vectors (each of length H) are summed. In this step the attention vector 130 is used, together with the representational vectors, to generate the weights 102, which are then used, again together with the representational vectors, to generate the weighted combination. The context vector 103 is a 1D vector of length H, in which each entry is the weighted sum of the corresponding entries from the representational vectors.

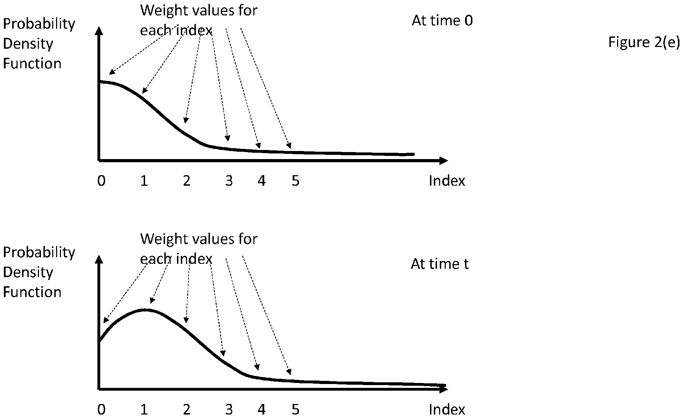

In an alternative Alternatively outputs one or more values defining a probability distribution. For example, the attention mechanism 113 may output a 2-dimensional vector, with the first value being a mean, and the second value being a standard deviation. The weight for each representational vector is then generated using the index of the representational vector (i.e. the position in the sequence) and the corresponding value of the output Gaussian distribution. Figure 2(e) shows a schematic illustration of the weight value generated for each representational vector using the index and the probability distribution. In the example, at time 0, the mean is 0 and variance 1. The weights for each of the representational vectors are dependent on the index of that representational vector, i.e. the first vector (indexed at 0) would be assigned a weight of 0.5 (being the probability density value of a Gaussian with mean 0 and variance 1 at 0). For the second representational vector, its weight would be the probability density value of the Gaussian at 1, then 2, 3, etc. At time index t, a different probability distribution with a different mean value is generated and used to obtain the weights 102. These weights 102 are then used to perform the weighted sum as described previously. The alignment feature weights 102 may then be used in place of the attention mechanism 113 with a different input, as will be described below. For example, a Gaussian distribution with mean on zero for the first output frame weights the first representational vector the most, then for each output frame it slides across the representational units. Other kinds of probability distributions may be used, for example a Gaussian Mixture Model, with its own set of means, standard deviations and GMM weights. For a GMM, the attention mechanism may output a H by 3 dimension vector, where there are H Gaussians, and each Gaussian having a mixture weight, mean and standard deviation value. Alternatively, a Mixture of Logistics model may be used. instead of outputting a mean value at each time step, the attention mechanism 113 may output an increment to be added to the previous mean. For example, the mean may start at 0, and the attention mechanism outputs an increment to be added on to zero at each time step (i.e. for each output frame). At the next time step, the mechanism outputs another increment to be added on to the new mean. This ensures that the mean is always increasing, and enforces a monotonic relationship between the phone sequence and the output sounds.

The context vector 103 of length H is fed into the update network 111 in step S305, together with the first characteristic vector 106 of length M and the output WORLD vector of length J from the previous time step. For the first time step, the output WORLD vector is taken to be a vector of zeros. The context vector 103, characteristic vector 106 and output feature from the previous time step are concatenated to form a 1D vector of length H + M + J. The update neural network 111 outputs a vector of length P. The output vector of length P is written into the decoder state in step S305. At each step, the current output vector of length P is written in at position 1 and the last vector at position S is deleted in the memory. The update neural network may for example have 1 layer, with P units.

The attention vector 130 is used to generate weights used to weight the encoder outputs when they are summed in step S304, before being inputted into the update neural network 111. It is expected that the focus of the attention weights scans across the encoder outputs, in a monotonic fashion, as each frame is generated. During training, the attention mechanism gradually learns to scan across the encoder, and at the right pace, to generate the correct outputs to the decoder.

The decoder neural network 112, which for example may have 1 layer with the same number of units J as the output (for example 67 units corresponding to the 67 dimensions in a WORLD feature vector), then reads from the entire decoder state, which is flattened to a S*P length 1D vector, to produce an output WORLD feature vector corresponding to one frame in S306. The decoder neural network 112 thus takes as input a 1D vector of length S*P. The decoder neural network 112 outputs a 1D vector of length J equal to the length of the output feature vector (e.g. the WORLD vector).

In S307, it is determined whether a maximum number of frames has been reached. A maximum number of frames is determined for each input segment of speech signal, for example as a multiple of the number of phone units in the segment. As an example, the maximum number of frames is 20x the number of phone units. If the maximum number of frames has not been reached, the attention mechanism 113 generates the next attention vector 130, taking as input the decoder state. The process repeats again until a maximum number of frames has been reached in S307.

In the second stage, the model is modified to replace the attention network 113. Since in this example, the input to the second stage comprises the same input data sequence as for the first stage, steps S301 and S302 do not need to be performed again in the second stage.

In this example, a different characteristic vector 202 is used in the second stage. Since the characteristic vector 202 is used only in S305 in this example, the steps prior to this do not need to be performed again in the second stage. That is, instead of replacing the attention network 113 with the stored alignment features, in this example the encoder 114 and attention network 113 can be replaced with the stored context vectors 103 generated in the first stage. In this case, the intermediate state comprises the stored context vectors 103, and these replace the first part of the model, comprising the encoder 114, the weighted sum and the attention network 113. Of course, alternatively, the context vectors 103 may be re-generated using stored alignment features 102 in the second stage. In general, various parts of the model may be replaced by the stored intermediate state, depending on at which stage a changed input is used.

In the second stage, each stored context vector 103 of length H is fed into the update network 111 in step S401, together with the second characteristic vector 202 and the output WORLD vector from the previous time step in the same manner described previously. Again the update neural network 111 outputs a vector of length P. The output vector of length P is written into the decoder state in step S401. At each step, the current output vector of length P is written in at position 1 and the last vector at position S is deleted in the memory.

The decoder neural network 112 then reads from the entire decoder state, which is flattened to a S*P length 1D vector, to produce an output WORLD feature vector corresponding to one frame in S402. The decoder neural network 112 thus takes as input a 1D vector of length S*P. The decoder neural network 112 outputs a 1D vector of length equal to the length of the output feature vector (e.g. the WORLD vector). The WORLD feature vectors are then converted into speech using the WORLD Vocoder 301 in S403.

In the above described examples, a sequence to sequence data processing method is performed in two stages using a model. In the first stage, a first input is processed and an intermediate state comprising information relating to an alignment relationship between the input data sequence and the output data sequence is generated and stored. In a second stage, a second input is taken, and the method uses the stored intermediate state to replace part of the model.

The method can be used to improve the quality of the output, for example to correct or mitigate a failure of the data processing model with the second input. For example, sequence to sequence systems may fail to generate output data corresponding to whole parts of an input sequence. Alignment information generated for a different input can be used for the second input in order to correct or mitigate such an alignment failure. This may comprise detecting, either automatically or by a user, a failure when using the desired inputs, and modifying the inputs to the system until a robust output is generated. Intermediate outputs of the system are then copied from the test time of the robust output to the same system running with the desired inputs, such that an improved output is generated with the desired inputs.

In the below methods, the text-to-speech system described previously, comprising a sequence-to-sequence neural network, is described as an example application of such a method. In the described examples, a different characteristic vector 106 is used to force alignment. Alternatively however, and as has been described previously, some other change to the input may be made, for example by changing the sequence of phonetic units 101 to a structurally similar phonetic sequence. In order for the intermediate state to be transferrable, the inputs are structurally similar. The input data sequence has the same length. All of the inputs may have the same dimensions. In this case, the perturbed sequence of phones comprises the same number of phones as the original sequence.

Figure 3(a) shows a method in which a candidate input is detected by a user and a process performed in order to improve the output 201. For example, when a faulty output 201 is produced, this is detected by the user.

The system 100 takes as input a sequence of phonetic units 101 and a desired characteristic vector 202. Alignment features generated in each time step form an alignment map 203, which is a collection of all the alignment features generated during inference and is a by-product or intermediate state of the model 100. The system outputs a sequence of output feature vectors 201, which in this example are WORLD feature vectors.

Thus an input comprising the phone sequence 101 and the desired characteristic vector 202 are taken as input to the model 100 in the first stage. This results in a third output data sequence 201. The third output data sequence is detected by the user as being a candidate for improvement. For example, it is detected as being faulty. The fault may be detected from the alignment map 203 instead of or in addition to being detected from the output.

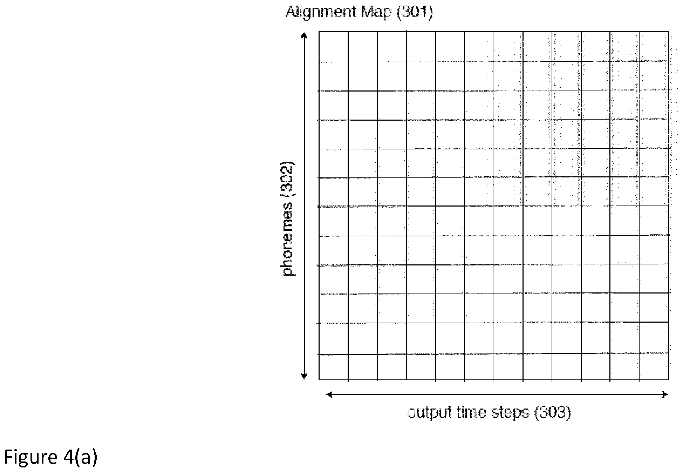

As has been described previously, for each time step, the model generates a vector of alignment features 102. The dot product of the attention vector 130 output from the attention mechanism 113 for the time step with each representational vector output from the encoder 114 is taken in turn, which gives a sequence of scalars (one number corresponding to each representational vector). These scalars are combined to form the alignment feature 102 for the time step. The length of the alignment feature vector 102 is the number of phones (i.e. the number of representational vectors). These values are also referred to as the weights. The alignment feature vectors 102 from each time step are combined to give the alignment map 203, where the alignment feature vector 102 from each time step forms a column in the alignment map 203. The number of columns thus corresponds to the number of time steps (i.e. the maximum number of frames) and the number of rows corresponds to the number of phones. This is illustrated in Figure 4(a).

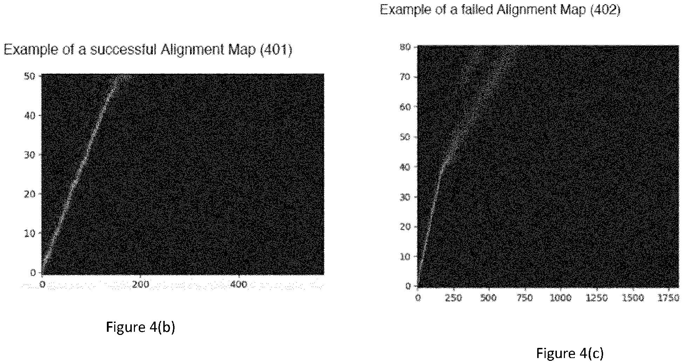

For successful alignment, it is expected that as the time step increases, the maximum value of the alignment feature 102 should move along the phones, from the start to the end of the utterance. In other words, a monotonic relationship between the phone in the sequence corresponding to the maximum and the output audio frames should be seen - as the time step increases, so does the index of the phone corresponding to the attention. It is expected that the focus of the attention weights scans across the encoder outputs, as each frame is generated. An example of a successful alignment map can be seen in Figure 4(b). The shading indicates the magnitude of the weight, where a lighter shading corresponds to a higher weight. As can be seen, the maximum of the alignment feature 102 scans along the phones with increasing time frame.

Figure 4(c) shows an example of a failed alignment map. As can be seen, for the second part of the utterance, the maximum values are dispersed across multiple phones. Although in Figure 4(c), the failure occurs for the latter part of the utterance, the failure may additionally or alternatively occur for a middle or start portion of the utterance.

A fault in the alignment relationship between the second input data sequence and the third output data sequence may be detected by a user from looking at the alignment map 203 or from the output audio generated from the output features 201. For example, the output audio may be noise for the second part of the utterance.

In response to the third output data sequence 201 being detected by the user as a candidate for improvement, the desired characteristic vector 202 is perturbed by perturbation module 213 to obtain a perturbed characteristic vector 106. A perturbation is applied to the characteristic vector 202, to generate a new characteristic vector 106 (or perturbed characteristic vector). The perturbation module 213 may simply add a noise term **e** to the desired characteristic vector 202 **s** to obtain the perturbed characteristic vector **t** 106: $t = s + e$ such that **e** ~ N(0, dl), where **e** is a vector of the same size as the characteristic vector **s.** Each entry in **e** is drawn from a normal distribution. The vector **e** then gets added element wise to **s**, such that a single noise value is added to each of the numbers in the desired characteristic vector.

Alternatively, the perturbation module 213 may retrieve the closest characteristic vector from a collection of stored vectors, such as a look-up table.

A first input comprising the same phone sequence 101 and the perturbed characteristic vector 106 is taken as input into the TTS model 100. The model generates a first output data sequence, also referred to as the perturbed output features 107. Again, for each time step, the model 100 generates a vector of alignment features 102 by taking the dot product of the attention vector 130 output from the attention mechanism 113 with each representational vector output from the encoder 114 in turn. The alignment features 102 are used to form the perturbed alignment map 108. By changing the characteristic vector 202, it is likely that alignment will be achieved. If alignment is not achieved, a further iteration may be performed, whereby a further perturbation is applied for example, until alignment is achieved. The perturbed characteristic vector 106 is used on the same TTS system 100 to generate perturbed output features 107 and a perturbed alignment map 108.

A first part of the model 100 generating an intermediate state comprising information relating to an alignment relationship is then replaced by the intermediate state generated when the model 100 is run using the perturbed characteristic vector. For example, the attention mechanism 113 may be replaced by the alignment map. Alternatively, the initial part of the model comprising the encoder 114, attention mechanism 113 and weighted sum may simply be replaced by the stored context vectors 103 generated using the perturbed characteristic vector as input. The context vectors are also an intermediate state comprising information relating to an alignment relationship between the input and output sequence, since they are generated using the alignment features.

Finally, the modified model is run using the desired characteristic vector 202, to generate the desired output features 207 and the same phone sequence 101. Thus the perturbed alignment map 206 is fed into a forced TTS system with a second input, comprising the desired characteristic vector 202 and the phone sequence 101. The forced TTS system has the same parameters as the TTS system 100, except it uses the robust alignment map 206 instead of the one generated by the attention network 113. As described above, depending on the configuration of the system 100, the context vectors 103 may be used rather than the alignment features 102 in the forced system. This way, the forced TTS system will then generate the desired output features 207, which will have the characteristics embodied by the desired characteristic vector 202 as well as the robust properties of the perturbed output features 107.

Figure 3(b) shows a method in which a candidate is detected automatically and the process of modifying the model triggered. The method is similar to that described in Figure 3(a), and therefore description of like features is omitted. The method may be used to automatically correct neural network systems during production, which may produce invalid and faulty outputs from time to time.

In the method of Figure 3(a), a user detects a candidate by inspecting the output and/or the alignment features for a fault. In the method of Figure 3(b) however, the combined alignment features, referred to as the alignment map 203, are fed into a model 411, which determines whether the improvement process should be triggered. The model is referred to as a "robustness model".

The robustness model 411 is trained to determine whether an alignment map shows the properties of a robust output. If not, then the perturbation module 213 is run to obtain a perturbed characteristic vector 106, and the text to speech algorithm is run again as described above.

The robustness model 411 is a trained model. It may be a classifier type model or a regression type model. For example, the robustness model 411 may comprise a logistic regressor or a decision tree. It takes as input a plurality of features of the alignment map 203. For example, a first input feature may be the mean of the maximum values of each alignment feature 102 in the map, a second input feature may be the maximum or the mean of the entropy values for each alignment feature 102.

In general, entropy is a measure of how unpredictable the outcome of a random variable is. That is, if a random variable X is distributed according to a probability distribution over different categories c₁, ..., cᵢ, the entropy is highest for a distribution where all categories are equally likely (i.e., the outcome is very unpredictable), and lowest for a distribution where one category has a probability of 1 and all the others have a probability of 0 (i.e., the outcome is maximally predictable). Entropy (S) may be calculated as follows: $S = - {\sum }_{i} {P}_{i} log {P}_{i}$ where Pᵢ is the probability that the outcome of X will be cᵢ.

In the present case, the entropy of an alignment feature 102 is determined using the above equation, where the Pᵢ values correspond to the values in the alignment feature 102 vector. As has been explained previously, since the softmax function is applied when generating the alignment feature 102, it is ensured that the sum of the components of the alignment feature 102 is 1. Each alignment feature vector 102 can be seen as a probability distribution over phones. The entropy of an alignment feature 102 corresponding to the point of failure is higher than the entropy of successful alignment features 102. If this "distribution" is more "peaked" (i.e. one value or a few values are much higher than all the others), the entropy is low. If the distribution is more flat (i.e. values on all the phones are about the same or widely spread, meaning the model doesn't know where the attention should be, and therefore fails), the entropy is high. Features can be extracted by taking the entropy in one dimension and then aggregating the minimum or mean in the other dimension, or taking the entropy in both dimensions of the alignment map for example (measuring overall how "distributed" the attention weights are, where more distributed weights correspond to the model failing). Alternatively, the values in the alignment map may be taken directly as input. For example, the alignment map 203 may be flattened, so that the values are arranged in a 1D vector. This vector is then taken as input to a neural network classifier. The alignment map may be stretched or padded to a fixed size, such that each input to the classifier is the same length. Alternatively, a CNN, or convolutional filter (using 1D convolutions across time) or RNN could be used in order to manage input sequences of differing sizes. In this manner, the alignment map 203 is treated as an image, with the values corresponding to pixel values. The robustness model 411 classifies the images, for example into success or failure. the robustness model 411 comprises a logistic regression classifier. The robustness model 411 receives input features derived from the alignment map 203, and outputs a label "success" or "failure" for the map. The model thus classifies the maps into two classes: success or failure.

Logistic regression is a type of linear classifier, configured to model a linear decision boundary between examples of one class ("success") versus another ("failure"). It models the probability of a default class being the correct output y, given the input features x. For example, the default class may be "success". In this case, given the input features x derived from the alignment map 203, the model gives the probability that the alignment map corresponds to a success. The model uses a regression term wx + b, where w is a learned weight vector, x is the vector of input features, and b is a learned additional constant. It applies a logistic function (or sigmoid function) to the output, to convert the continuous regression line into a probability value bounded between 0 and 1: $P \left(y=success\left|x\right.\right) = \frac{- 1}{1 + {e}^{- \left(wx+b\right)}}$

Each weight in the weight vector corresponds to an input feature. The input values x are combined linearly using the weights w. The alignment map is a 2D matrix. Features are extracted which summarize some aspect or property of the alignment map in a single number, and these form the input features x. This simplifies the learning of the logistic regressor model 411, since the input features summarize global patterns rather than individual, local 'pixels' in the attention map.

For failed alignment maps, the distribution across both phones and output time steps is more uniform and less peaked compared to successful alignment maps. This implies that the maximum over phones as well as over output time steps will be lower at the phone where the alignment starts to fail. Taking the maximum in one dimension (e.g. across output time steps) and subsequently the mean or minimum of these values in the other dimension (e.g. across phonemes) for example will therefore result in a number which is likely to be different for successful and failed alignment maps. Thus a maximum is taken for each time step, and then the mean of these values is taken for example. Other possible input features comprise the standard deviation in one dimension and then the maximum/mean in the other dimension for example, the kurtosis in one dimension and then the standard deviation/mean/minimum in the other dimension, and the overall entropy of the alignment map. One or more of these features may be derived from the alignment map and taken as input. an initial step of determining the features which split the data best into successes and failures is performed using the training data. These features are then selected as the input features for the model, and the model then trained in the manner described below. The n best features may be selected in this manner. For example, the two features which split the data best into successes and failures are first determined based on information gain. Information gain measures the relative reduction in entropy obtained when splitting on a particular input feature. That is, it measures how much more homogenous the subsets of all training examples get by splitting, e.g., into two groups based on a threshold value for any of the aforementioned features: $Information Gain = Entropy \left({S}_{0}\right) - \frac{{n}_{1}}{{n}_{0}} Entropy \left({S}_{1}\right) - \frac{{n}_{2}}{{n}_{0}} Entropy \left({S}_{2}\right)$ Where S₀ is the set alignment maps for the original training examples, S₁ and S₂ are the subsets of alignment maps after splitting based on the feature, and n₀, n₁, and n₂ are the respective numbers of training examples in the sets. Entropy may be determined in the same manner as has been described previously. the input features comprise the per-time frame minimum of the per-phoneme maximum - referred to as min(max(T)) - and the mean over phonemes of the per-time frame maximum - referred to as mean(max(P)). Here T is the set of output time steps (columns in the alignment map) and P is the set of input phonemes (rows in the alignment map). These features were found to be informative based on training set data.

Optionally, the features are normalized on the training set to have a mean of 0 and a standard deviation of 1. The same normalization is then applied to the input features during run-time.

The classifier is trained on labelled examples of alignment maps produced by running a trained TTS model and manually assessing each run as successful or failed. Training of the classifier 411 comprises finding appropriate weights (w) and a bias term (c) which will yield the best accuracy on predicting the correct label for each training example, from the features.

During training, for each alignment map in the training data set, the input features are extracted and inputted into the robustness model 411, producing an output probability that the alignment map is a success. Each alignment map also has a corresponding label, the label being 1 if it was manually designated a success and 0 if it was manually designated a failure.

The output probability may be used to determine a loss, using the label as ground truth.

The gradient of the loss with respect to each of the trainable parameters of the model 411 can be determined through back-propagation, and used to update the parameters. Optionally, an L2-norm is added to the loss function, which is a regularization term that reduces the chance of overfitting to the training examples, in other words the model is more likely to generalize to unseen examples. The training objective (i.e. minimization of the loss function) is defined as: ${min}_{w , c} \frac{1}{2} {w}^{T} w + C {\sum }_{i = 1}^{n} log \left(exp\left(-{y}_{i}\left({X}_{i}^{T}w+c\right)\right)+1\right)$ where w is the vector of weights, and c the bias term, C is a hyperparameter, y is the vector of labels and X is the vector of input features for training example i.

The training process is performed iteratively over the whole training set. weights (w*) are found by using the limited-memory BFGS optimization algorithm or Newton gradient descent method. The parameters of the model 411 are replaced with the new values.

The quality of the model 411 can be assessed during training using a separate test set of the same type of manually labelled alignment maps. The training process may be stopped once the quality is determined to meet a pre-set criteria.

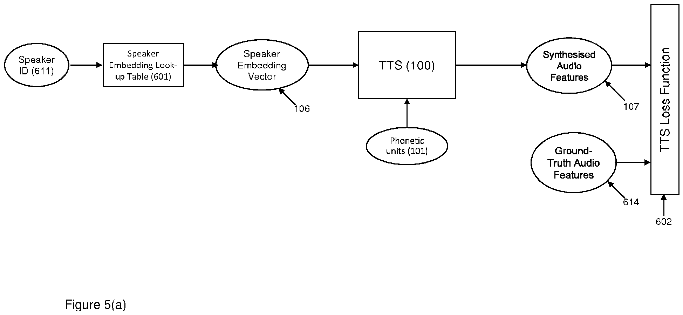

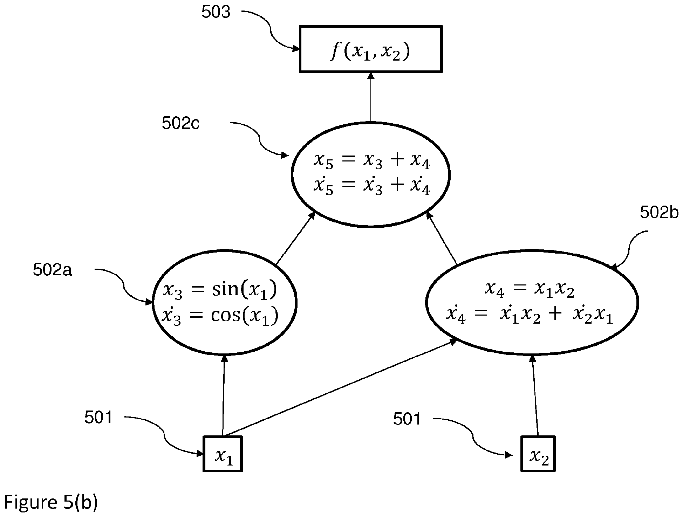

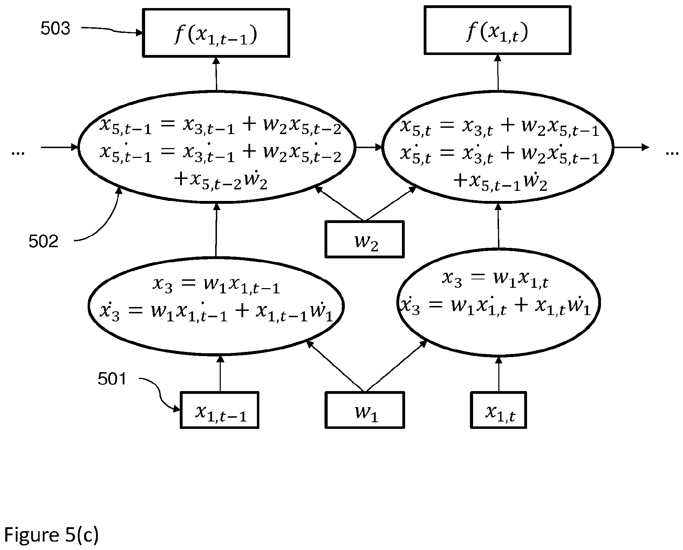

The robustness model 411 is trained separately, and subsequent to, the training of the speech synthesis system 100. A training procedure for a speech synthesis system 100 will now be described with reference to Figures 5(a), (b) and (c). In the below example, the characteristic vector 106 is a speaker embedding vector. A further example in which the characteristic vector 106 comprises a speaker vector and a language vector will be described subsequently. Figure 5(a) shows a schematic illustration of a method of training a speech synthesis system

The training method uses a speaker embedding look-up table 601. The speaker embedding look-up table 601 comprises a stored matrix of size K x M, where K is the number of speakers in the training corpus. It takes as input a target speaker ID 611 of a speaker in the training corpus. The target speaker ID 611 may comprise a number between 1 to K which identifies a speaker. The input target speaker ID 611 identifies a corresponding row in the look up table 601, which comprises the speaker embedding vector 106, of length M.

During training, the values of the speaker embedding vectors in the speaker embedding look-up table 601 as well as the parameters of the TTS 100 models are trained through backpropagation from the loss function 602 between the synthesised audio features 107 output from the TTS model 100 and the ground-truth audio features 614 (i.e. those in the training data set). For example, the loss function 602 may be the mean-squared error.

The training uses a training dataset comprising a plurality of speech signal segments from a plurality of speakers and text information corresponding to the speech signal segments. Each example in the training data may comprise: the speech audio itself which is converted to WORLD vectors 107, the corresponding text which is converted to phone units 101 using a grapheme-to-phoneme converter, and a speaker ID 611. Each speaker ID 611 is initially mapped onto a trainable speaker characteristic vector 106. Each speaker vector 106 is stored in the lookup table 601 for example. Thus each speaker in the training data set has a corresponding speaker vector 106. For each segment of speech corresponding to the same speaker, the same speaker vector 106 is used (updated progressively through the training process). Since different segments of speech corresponding to the same speaker will have the same speaker vector 106, the speaker vector is independent of the text/word information.

Training is performed by feeding in the speaker vector 106 and the phone sequence 101 for a segment, producing a sequence of WORLD vector outputs 107 in the same way as has been described above in relation to the run-time stage. The output WORLD feature vectors 107 may be used to determine a loss, using the target WORLD vectors 614 extracted directly from the audio signals as ground truths. The gradient of the loss with respect to each of the trainable parameters of the speech synthesiser, including the speaker vector 106, can be determined through back-propagation. The gradients may then be used to determine the updated parameters, using an optimiser function. An example of the loss function that may be used is a mean squared loss: $L = \frac{1}{NT} {\sum }_{n = 1}^{N} {\sum }_{t = 1}^{T} {\left|\left|{\hat{y}}_{t , n}-{y}_{t , n}\right|\right|}^{2}$ where ý is a WORLD feature vector extracted from the audio (ground truth) of dimension J, where there are T instances (frames) in the utterance n, y is a WORLD feature vector generated from the speech synthesis module also of dimension J, with T instances for each element in the batch of N. N is the batch length, where N may be equal to 128 utterances for example. Each batch has a random selection of speakers and utterances. The loss shown is the average over the batch.

Determination of the gradients may be performed using a computational graph. Computational graphs and their relevance to training of neural networks will now be described in relation to Figures 5(b) and 5(c) below.

Figure 5(b) is a schematic illustration of an example of a computational graph for a simple function f(x₁, x₂) = sin(x₁) + x₁x₂ . This simple function is mapped to the computational graph, in order to show how a computational graph may be used to represent a series of operations. Each neural network in the speech synthesis system 100 can be mapped to a computational graph in a similar manner, which can then be used to determine the gradient of the loss with respect to each trainable parameter, including the speaker vectors. The frameworks (i.e. the neural network modules in the speech synthesis system 100) may be implemented in auto-differentiation frameworks such as PyTorch or TensorFlow for example. Each neural network module in the speech synthesis system is mapped to a directed, differentiable computational graph during the forward pass.

In the example, each node 502 in the graph represents an operation such as addition, multiplication or other mathematical functions. In the example, the inputs 501 to the function are x₁ and x₂. In this case, the input x₁ is inputted into node 502a and node 502b. The input x₂ is inputted into node 502b.

In node 502a, a value x₃ is calculated, where x₃ = sin(x₁). The expression for the total derivative of x₃ is also shown, where in this case *ẋ*₃ = cos(*x*₁). The derivative values (with respect to any of the variables, e.g. x₁, x₂) may also be calculated during the forward pass. Thus for each input value of x₁, a functional representation of x₃ and *ẋ*₃ (with respect to one or more of the variables) may be determined during the forward pass. The functional representations of the derivatives may be determined and saved during a forward pass, while the values are calculated during backpropagation once the loss is obtained.

Similarly, in node 502b, x₄ is a function of x₁ and x₂, where *x*₄ = *x*₁*x*₂. The expression for the total derivative is also given, *ẋ*₄ = *ẋ*₁*x*₂ *+ ẋ*₂*x*₁. For each input value of x₁ and x₂, a value of x₄ and a functional representation of the derivative of x₄ (with respect to one or more of the variables) may be determined.

The input to node 502c is the output of node 502a (i.e. x₃) and the output of node 502b (i.e. x₄), where *x*₅ = *x*₃ *+ x*₄. The expression for the total derivative is also given, *ẋ*₅ = *ẋ*₃ *+ ẋ*₄. In node 502c, for each input value of x₁ and x₂, a value of x₅ (which is a function of x₃ and x₄) and a value of the derivative of x₅ (with respect to any of the variables) may be calculated.

The output 503 of node 502c is the output value of the function f(x₁, x₂).

For each node that is reliant on another node (for example node 502c in the figure), the chain rule is used to obtain a representation of the differentiation. In each forward pass, the derivatives of the functions with respect to one or more of the variables may be accumulated and saved for each node, such that during back-propagation, values are fed into the derivative expressions and the values of the gradients are then obtained.

It can be seen that each neural network module in the speech synthesis system 100 may be represented by a computational graph in a similar manner. These may be connected together into a single computational graph. The calculations in the graph are performed for each utterance in the batch at a time.

Figure 5(c) is a schematic illustration of a simple computational graph unfolded through time. For neural networks that use the same weights for each time step (i.e. each generated frame in the present case), the computational graph is unfolded for each of the time steps that occurs during the forward pass. For parameters which are used across time, the graph still treats the parameters across time as separate parameters, but during the update, the update for the specific parameter that is used across time is averaged across time. In other words, the gradient of the loss with respect to the weight at each time step is determined, and these values are then averaged to give a final gradient of the loss with respect to the weight (for example).

The horizontal arrows in the computational graph, which denote where the input to one node is the output from a node at a previous time step, can be used to represent the operations which take an input from a previous time step described in relation to the speech synthesis above for example. Backpropagation across the entire graph (and therefore neural network) for all time steps for an input utterance is therefore possible, as long as each of the operations used is differentiable.

Thus for a single training example in a batch, which may have a size of 128 utterances for example, the gradient of the loss with respect to each of the parameters (i.e. weights and biases in the neural networks, the speaker vectors 106, etc) is calculated, based on the back-propagated error signal and the feedforward activation signals (inputs to each layer). Every operation performed in the forward pass is differentiable and therefore a functional expression for the derivative of the loss with respect to every single parameter (i.e. weights, biases, speaker vectors) can be determined by the chain rule. The gradient values are calculated from these expressions using the back-propagated error and the activations (inputs for each layer from the forward pass, cached during the forward pass).

In the simple example computational graph shown in Figure 5(c), the function f may correspond to the loss for a particular frame (time step) for example. Thus f(x₁, ₜ) may correspond to the loss at time step t. The value of the function f corresponds to x₅. The gradient of the loss at time step t with respect to each of the parameters (i.e. the weights w₁ and w₂ in this example case) corresponds to the derivative of x_{5,t} with respect to the particular weight. This may be determined from the expression for the total derivative. The gradient of the loss with respect to the weight at each time step is determined, and an average value is used.

In this case, *x_{5,t}* = *x_{3,t} + w*₂*x*_{5,*t*-1}. The expression for the total derivative is ${x}_{5 , t}^{⋅} = {x}_{3 , t}^{⋅} + {w}_{2} {x}_{5 , t - 1}^{⋅} + {x}_{5 , t - 1} {\dot{w}}_{2}$. Furthermore, *x*₃ = *w*₁x_{1,*t*} and the expression for the total derivative is ${\dot{x}}_{3} = {w}_{1} {x}_{1 , t}^{⋅} + {x}_{1 , t} {\dot{w}}_{1}$. In order to determine the derivative of the loss (x₅) with respect to the weight w₂ for example, the derivative of x₅ with respect to w₂ would be determined. Of course in practice the loss function would be quite different, and the computational graph will contain many nodes and parameters. However, the gradients may be determined using the computational graph in a similar manner.

In the speech synthesis module, the speaker vector is concatenated with the context vector 103 and the output feature from the previous time step 120 and the result inputted into the update neural network 111. This is a differentiable operation, and thus a value of the gradient of the loss with respect to each feature in the speaker vector can be determined for the input example (in the same way as a value of the gradient of the loss with respect to each weight and bias is determined). The concatenation operation has no effect on differentiation and the calculation of the gradients, since each dimension in the input to a neural network layer is treated independently.

The computational graph may result in an array of gradient values, each corresponding to a parameter, for each training example in the batch. These are converted to a single gradient value for each parameter (for example by taking the average of the gradient values for all training examples for the particular parameter in the batch).

The gradient for each parameter is then used to calculate the updated parameter from the previous values using the optimizer function (i.e. a gradient descent type optimiser function). The input to the optimiser function for each parameter is the previous value, the corresponding gradient value and a learning rate parameter. In general, gradient descent based optimizers update the parameter in the direction of steepest descent of the loss function with respect to the parameter, scaled by a learning rate, for example 0.001. The update is averaged across the batch in order to account for noise in individual training examples and increasing the generalising power of the trained neural network. Thus the gradient values are averaged across the batch and then used in the optimiser to determine the new parameter values. The parameters are replaced with the new values and the process iterates with another batch of training signals. while the speaker vectors lie in the same M-dimensional space ${ℝ}^{M}$, each individual speaker characteristic for each speaker is updated only by utterances which are of the same speaker, as the individual parameters in each of the dimensions of the speaker characteristic vectors are independent from each other and from other speaker characteristic vectors. during back-propagation, a gradient update for a parameter is only calculated after the parameter is used in the forward pass. This means that a specific parameter in the speaker vector for a specific speaker is only updated when that speaker ID and a corresponding utterance is present in the batch. Further, if multiple utterances for the same speaker is used, the gradient update is still averaged "across the batch", i.e. there may be 3 utterances from a particular speaker in a batch of N, then the gradient updates from those 3 utterances is summed and divided by N, (since the gradient update from the rest of the batch is zero). Thus the gradient values for the speaker vector feature for each utterance in the batch with the same speaker ID are combined (for example averaged) to give a single gradient value corresponding to each speaker vector feature. These are then used to update each speaker vector using the optimizer function. In this way, the speaker vectors for each speaker ID are updated separately. one or more constraints are placed on the speaker characteristics 106 during training, such as that the squared norm of the speaker vectors must be less or equal to unity. This may be enforced after the update, i.e. perform the gradient update, and divide the output vector by the squared norm, such that the squared norm is at unity.

At the beginning of training, the speaker characteristic vectors for each speaker in the training data may be randomly initialised (along with the other trainable parameters). Within the training data, there are many utterances from different speakers, such that many speakers utter the same words (and sometimes sentences) as each other. This means that within a single batch during training, there may be instances of the same sentences by different speakers and different sentences by the same speakers to train on, allowing the system to learn what is common and different within the input and output. During training, the speaker characteristic vector for each training speaker is iteratively updated as parameters of the TTS system 100. As such, the characteristics for each speaker start to gradually represent meaningful information to the TTS system.

The text to speech system described above may be used as part of a spoken language translation system for example. Such systems generate speech in a target language from a textual translation of speech in source language. A speech signal in the target language is then generated from the translated text signal (e.g. sequence of phones) as input and using a characteristic vector. In the below, the case where the characteristic vector is a speaker vector is described. However, as will be described subsequently, the characteristic vector may also comprise a language vector.

Such a system may have particular application in video translation, and various scenarios where multiple speakers are involved, such as conferences or multi-person video/audio calls for example. Each speaker's characteristics are maintained, such that the listener can tell apart the speakers. The system may have application in areas such as media and entertainment for example, where it may be used to replace the human dubbing process for video or audio files, by automatically generating sequences of dialogue for a target language, given a piece of dialogue in a source language. This may make automatic voice-over translation possible (without using human translators or voice actors).

Figure 6(a) shows a flow chart illustrating the processing stages included in a speech processing system according to an embodiment.

A segment of a first speech signal 6110 comprising a source language A (second language) is inputted. The speech input 6110 in the source language A may be collected using a microphone for example. The speech signal 6110 is input to a speech recognition module 6101 for example, producing text 111 in the source language A. This step comprises generating a first text signal from a segment of the first speech signal, the first text signal comprising the source language A. Any type of speech recognition process may be used in the speech recognition module 6101. For example, a trained speech recognition module 6101, which has been previously trained using audio and text data in the source language may be used. For example, a neural network or Hidden Markov Model based system that is deployed locally, over the cloud, or third-party APIs. The speech recognition module may optionally be configured to output timestamps for individual words or sentences.

The source language text 6111 is then input to a text-to-text translation module 6102, producing output text 6112 in the target language B. This step comprises generating a second text signal 6112 from the first text signal 6111, the second text signal comprising the target language. Any type of text-to-text translation process may be used in the text-to-text translation module 6102. For example, a trained text-to-text translation module 6102 which has been previously trained using text data in the source and target languages may be used. Optionally, the text-to-text translation module is also configured to output alignment information, indicating alignment between the words in the source text and the words in the target language text.

The source language speech 6110 is also input into a speaker characteristic module 6104. This step may be performed in parallel with, prior to, or subsequent to the speech recognition step 6101 and the text-to-text translation step 6102 for example.

As has been described previously, the speaker characteristic module 6104 may comprise a look-up table of stored speaker vectors. A user may select a vector, or a vector may be selected automatically based on a speaker ID or information relating to speaker attributes. Alternatively, the speaker characteristic module 6104 may comprise a first trained algorithm, used to generate a speaker vector from input audio features. Alternatively, the speaker characteristic module 6104 may comprise a combination of the two approaches, in which a speaker vector is generated using the first trained algorithm some of the time (e.g. when input is received from a new speaker) and is retrieved from the look-up table the remainder of the time (e.g. when a speaker ID is recognised as corresponding to an entry in the look-up table). In the below description, the case in which a speaker vector is generated using a first trained algorithm is described.

A first feature vector is extracted from each of a plurality of frames of the segment of the first speech signal 6110, the first feature vectors comprising information relating to audio data corresponding to the frames of the segment of the first speech signal 6110. A speaker vector is then generated using a first trained algorithm taking the first feature vectors as input, wherein the speaker vector represents a set of features corresponding to a speaker. Thus audio features extracted from the input speech 6110 are fed into a first trained algorithm, which outputs a set of speaker characteristics 6113, or a speaker vector, being compatible with the target language B.

A text-to-speech module 100 such as has been described previously then takes in both the target language text 6112 and speaker characteristics 106, and produces audio output 6117 in the target language B, which may be broadcast using a speaker for example. This step comprises generating a second speech signal segment using a second trained algorithm taking information relating to the second text signal 6112 as input and using the speaker vector 106, the second speech signal segment comprising the target language B. The second speech signal 6117 is then output.

Optionally, the source language text 6111 may also comprise timing information for each of the words, or sentences, from the source language audio signal 6110. The timing information may then be included with the target language text 6112 and fed into the TTS module 100 such that the timing of the output speech 6117 is synchronised with the input audio.

Figure 6(b) shows a flow chart of the steps performed in a speech processing method The method is a method for speaker adaptive spoken language translation.

A segment of a first speech signal 6110 comprising the source language A (second language) is inputted in S201. The speech signal 6110 is input to a speech recognition module 6101 for example, which produces text 6111 in the source language in S202. The source language text 6111 is then input to a text-to-text translation module 6102, producing output text 6112 in the target language in S203.

The source language speech 6110 is also input into a speaker characteristic adaptation module 6104 in S204. In this step S204, first feature vectors are extracted from the segment of the first speech signal 6110, the first feature vectors comprising information relating to audio data corresponding to frames of the segment of the first speech signal 6110. In this example, the first feature vectors are WORLD speech feature vectors.

A speaker vector is then generated in steps S205 to S207, using a first trained algorithm taking the first feature vectors as input, wherein the speaker vector represents a set of features corresponding to a speaker. In this example, the first trained algorithm comprises a convolutional neural network, a max function and a neural network. Step S205 comprises convolving sets of filters (CNN) over the first feature vectors to obtain a filter response, step S206 comprises taking the maximum of the responses over time and step S207 comprises applying a neural network as a non-linear function to generate target language speaker characteristics. These steps will be described in further detail below, in relation to Figure 6(c).

Steps S208 to S210 comprise generating a second speech signal segment using a second trained algorithm taking information relating to the second text signal 6112 as input and using the speaker vector 106, the second speech signal segment comprising the target language B. In S208, target language text is converted to phonetic units. In step S209 second feature vectors (in this case WORLD feature vectors) are synthesized using target speaker characteristics (the generated speaker vector) and target text (the generated phonetic units), using a text to speech module 100 such as has been described previously. In S210 vocoder synthesis is performed. The second speech signal is finally output in S211.

An example of the speaker characteristic adaptation module 6104 and the method of generating the speaker vectors will now be described. The speaker characteristic adaptation module 6104 is an example of a system for generating speaker vectors. The system comprises an input for receiving first feature vectors (for example the WORLD feature vectors) extracted from a segment of a first speech signal comprising the source language and an output for outputting a speaker vector. The module 6104 is configured to generate a speaker vector using a trained algorithm taking the first feature vectors as input, wherein the speaker vector represents a set of features corresponding to a speaker. Figure 6(c) shows a schematic illustration of the speaker characteristic adaptation module 6104
In this method of generating a speaker vector, first feature vectors are extracted from the segment of the first speech signal comprising information relating to audio data corresponding to each frame of the segment of the first speech signal. The audio data may be spectral data, for example spectral envelope data, or the time domain audio waveform, for example the time domain amplitude values of the audio waveform. extracting the first feature vectors comprises a WORLD feature extraction process, which produces a 2D matrix output with dimensions T times J for a segment of the input speech signal, where T is the number of audio feature frames in the segment of speech signal (and corresponds to the number of rows) and J is the output dimension determined by the WORLD feature extractor 401 (which has been described previously). WORLD feature vectors are vector representations of the audio signal itself, i.e. spectrogram representations of the audio waveform which can be algorithmically converted back into speech.

The sequence of first feature vectors corresponding to the segment of input speech signal is then inputted into a trained algorithm, for example in the form of the TxJ array. the trained algorithm comprises a trained neural network. the trained algorithm comprises a convolutional filter bank 402. The WORLD feature array of size T times J outputted from the WORLD feature extractor 401 is fed into the convolution filter bank 402, which convolves a set, or a sequence of sets, of filters over its input. The convolutional filter bank 402 outputs a 2D matrix of size T times L, where L is the number of filters in the last set of the filter bank. In the example described, L=64.

The convolution filter bank 402 may be a convolutional neural network, where the filters are learnt automatically during a training stage. The training stage will be discussed in further detail later. Each set of filters may be considered as a layer within the convolutional neural network.

A convolutional neural network is a type of neural network that includes one or more convolutional layers. A convolutional layer comprises a set of linear filters, each characterised by a weights vector, and an additive bias term per filter. During operation, each filter is convolved across the input data. Each convolutional layer may have a different number of filters. Convolution of the filter across the input data results in 1-dimensional output data corresponding to each filter. The stride defines how much the filter is shifted along the input data in each step of the convolution, and is defined for each layer. The convolution operations are followed by a differentiable non-linear activation function, for example a ReLU (Rectified Linear Unit) function. The 1D data output from the filter is inputted to the activation function. The output of each layer is then fed as the input to the subsequent layer, which may be a further convolutional layer or a different type layer for example. In particular, one or more pooling layers may be included between one or more convolutional layers, which act to down-sample the data. The weights and biases which characterise each layer are learned before operation during the training stage, which will be described below. These are the trainable parameters. the filter bank 402 comprises 5 convolutional layers and 1 pooling layer. The pooling layer may be located after the 2^{nd} or 3^{rd} convolutional layer. Each convolutional layer may comprise 64 filters, using strides of 1.

Taking the matrix output of size T times L, a time-wise normalisation function 403 may then be applied across time (i.e. across the frames) to obtain a vector of size L. The time-wise normalisation function may be the max function, mean function or a recurrent neural network for example. For example, where the max function is used, for each column L in the array, the value of the row T with the maximum entry is extracted as the value for the output vector.

The output vector from the normalising function, of length L, may then be input into a neural network 404 to obtain the speaker vector 113, which may be represented as a vector of dimension M, where the speaker vector $113 ∈ {ℝ}^{M}$, where M is 32. The neural network 404 may be a multi-layer perceptron network for example. For example, the neural network 404 may be a 3 layer perceptron network with 32 units in each layer. During operation, each feature in the output vector from the normalising function is input. The output of each layer is then fed as the input to the subsequent layer. Each node in the hidden layers computes a weighted sum of all of its inputs (being the outputs of each input node) using a weight vector, and an additive bias term, and then applies an activation function to the result. For example, for the hidden layers, a ReLU activation function may be used. Each node in the output layer computes a weighted sum of all of its inputs (being the outputs of each hidden layer node) using a weight vector, and an additive bias term. The weights and biases which characterise each layer are learned before operation during the training stage, which will be described below. These are the trainable parameters.

Thus the speaker characteristic adaptation module 6104 generates a speaker vector using a trained algorithm taking the first feature vectors as input. In this example, the trained algorithm comprises a convolutional neural network 402, a time-wise normalising function 403 and a neural network 404.

The training procedure for the speech synthesis module 100 has been described previously. The training procedure for the speaker characteristic adaptation module 6104 will be described below. These components may be trained separately or together. They may then be used in a system together with a pre-trained speech recognition module 6101 and a pre-trained text-to-text translation module 6102 for example, which may be trained in any manner suited to the particular speech recognition module 6101 and text-to-text translation module 6102 used.

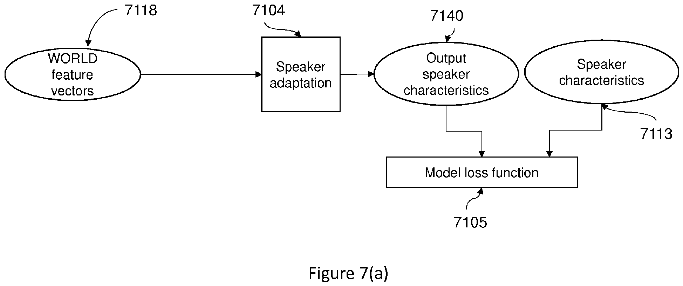

Figure 7(a) shows a flow chart of a method of training a system to generate speaker vectors Training of the speaker characteristic adaptation module 7104 may be performed after the training of the speech synthesis module 100, which has been described previously. The same training data may be used. In this case, the WORLD vectors 7118 extracted directly from the speech (and used as the ground truths in training the text to speech system 100) are used as the input to the speaker characteristic adaptation module 7104, in the same manner as during operation. The speaker ID and the corresponding trained speaker characteristics 7113 determined during training of the speech synthesis system 100 are used as the "ground truths". The training process may take place through gradient descent methods using back-propagation of error as described previously.

The method comprises generating speaker vectors using an algorithm taking the extracted first feature vectors as inputs. In this case, the extracted first feature vectors are the WORLD vectors extracted directly from the audio signal. The algorithm comprises the convolution filter bank 402, normalising function 403 and neural network 404 which have been described previously. The WORLD feature vectors are inputted and the algorithm performed in the same manner as during operation, producing an output speaker vector.

The output speaker vectors may be used to determine a loss, using the target speaker vectors generated during training of the speech synthesis system 100 as ground truths.

The gradient of the loss with respect to each of the trainable parameters of the system can be determined through back-propagation, and used to update the parameters. An example of the loss function that may be used is a mean squared loss: $L = \frac{1}{M} {\sum }_{m = 1}^{M} {\left|\left|{\hat{x}}_{m}-{x}_{m}\right|\right|}^{2}$ where *x̂* is the speaker vector generated during training of the speech synthesis module 100 of length M, and x is a speaker vector generated from speaker characteristic adaptation module from the input WORLD feature vectors, also of length M. For example M = 64. Instead of a mean-squared error loss function, alternative loss functions may be used.

The parameters of the algorithm are then updated using the updated speaker vectors generated during training of the second algorithm as ground truths. Thus for a training example in a batch, the gradient of the loss with respect to each of the parameters (i.e. the weights and biases in the neural networks) is calculated, based on the back-propagated error signal and the feedforward activation signals (inputs to each layer). Every operation performed in the forward pass is differentiable and therefore a functional expression for the derivative of the loss with respect to every single parameter (i.e. weights and biases) can be determined by the chain rule. The gradient values are calculated from these expressions using the back-propagated error and the activations (inputs for each layer from the forward pass, cached during the forward pass). This results in an array of gradient values, each corresponding to a parameter, for each training example in the batch. These are converted to a single gradient value for each parameter (for example by taking the average of the gradient values for all training examples for the particular parameter). The gradient for each parameter is then used to calculate the updated parameter from the previous values using the optimizer function (i.e. a gradient descent type optimiser function). The input to the optimiser function for each parameter is the previous value, the gradient corresponding value and a learning rate parameter. In general, gradient descent based optimizers update the parameter in the direction of steepest descent of the loss function with respect to the parameter, scaled by a learning rate. The parameters are replaced with the new values and the process iterates with another batch of training signals.

The neural network comprising the convolution filter bank 402, normalising function 403 and neural network 404 is able to capture speaker characteristics 113 across different languages. This is because it is only trained to operate on acoustic, vector representations of the speech input (e.g. WORLD feature vectors) without the use of any language-specific information or lexicon such as graphemic characters. This allows the neural network to extract features through audio alone, which are universal across languages and bypasses the need for bilingual data.

Where CNNs are used, some kind of padding may be used for the inputs in order to standardise input length. In this example, the WORLD feature vectors are inputted into the speaker characteristic adaptation module, which comprises a CNN. for utterances of differing lengths T in the same batch, any utterance that is shorter than the longest utterance in the batch is zero-padded to the longest length. In a batch of size 3, the first utterance in the batch may have 350 frames of WORLD feature vectors, the second 400 frames, and the third 200 frames. In this case, the first utterance has 50 frames of zero-values appended to its end, in order to have a length of 400 frames, and the third utterance has 200 frames of zero-valued feature vectors appended, also reaching a length of 400 frames. The second utterance is not altered.

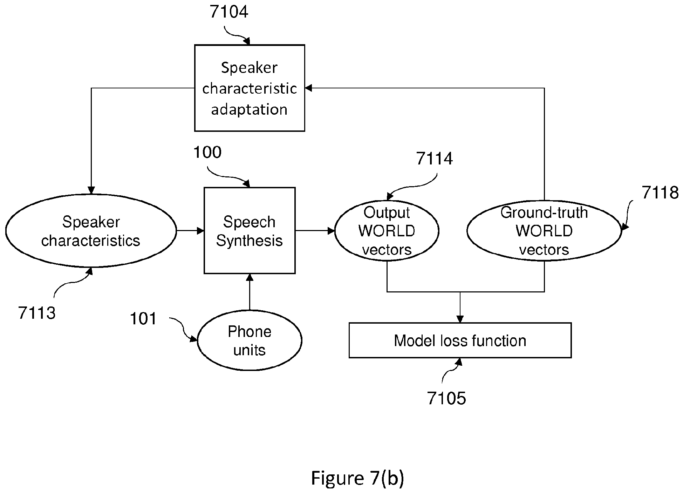

Although in the above, a method of training the speech synthesis module 100 first, and then subsequently training the speaker characteristic adaptation module 104 is described, alternatively it is possible to train both modules together. This is shown schematically in Figure 7(b) for example.

In this case, the training of both the speaker adaptation module 6104 and the speech synthesis module 100 happens jointly, in an end to end manner. The ground-truth WORLD feature vectors extracted directly from the audio signal are input into the speaker adaptation module 6104 to produce speaker characteristics, which are then input to the speech synthesis system 100, along with the phone sequence 101, to produce output WORLD feature vectors. This allows for the compression of the original speech into a sequence of phones, whilst a vector which represents the emotions and intonations of the speech for example is also extracted. This allows both systems to learn to work better with each other.

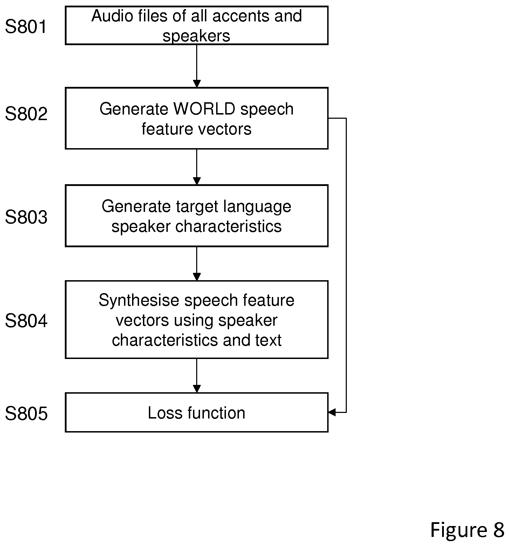

Figure 8 is a flow chart of a method of training a speech signal processing system to generate translated speech As has been described above, the training uses a training dataset comprising a plurality of speech signal segments from a plurality of speakers comprising a first language and text information corresponding to the speech signal segments. These are obtained in S801.

In S802, first feature vectors are extracted from the speech signal segments, wherein the first feature vectors comprise information relating to audio data corresponding to the speech signal segment from which the first feature vector was extracted. In this case, WORLD speech feature vectors are extracted from the audio data, in the same manner as during operation.

In S803, speaker vectors are generated using the algorithm taking the extracted WORLD feature vectors from S802 as inputs, wherein the speaker vectors represent a set of features corresponding to the speaker, in the same manner as during operation.

In S804, WORLD feature vectors are generated using a second algorithm taking the text information as inputs and using the speaker vectors. In this step, the speech synthesis algorithm generates the WORLD feature vectors from the phone information in the same manner as during operation.

Updating of both algorithms to improve the performance, including updating of the speaker vectors is performed in one step. The output WORLD feature vectors may be used to determine a loss, using the target WORLD vectors extracted directly from the audio signals as ground truths, in the same manner as described above. The gradient of the loss with respect to each of the trainable parameters of the two algorithms, including the speaker characteristics 7113, can be determined through back-propagation, where the neural networks and operations used to generate the speaker vectors are simply added to the computational graph, and the parameters updated in the same manner as has been described previously.

Thus for a training example in a batch, the gradient of the loss with respect to each of the parameters (i.e. weights and biases in the neural networks in both the speaker characteristic adaptation module 6104 and the speech synthesis module 100, the speaker vectors, etc) is calculated, based on the back-propagated error signal and the feedforward activation signals (inputs to each layer). The gradient for each parameter is then used to calculate the updated parameter from the previous values using the optimizer function (i.e. a gradient descent type optimiser function). This performed in S805.

In the above, speaker characteristic vectors representing a set of features corresponding to a speaker are used to generate synthesised speech. During training, each speaker in the training data set has a corresponding speaker vector. Each speaker speaks a number of different sentences, allowing the system to train the speaker vector to capture characteristics corresponding to a speaker. During training, for each speech signal segment for the same speaker, the same speaker vector is used (updated progressively through the training process). During operation, the system can extract speaker vectors from new speakers. during operation, for each input speech signal segment from the same speaker, the system extracts a speaker vector which is the same to within a tolerance of 5%.

The above described speech synthesis system 100 and speaker characteristic adaptation system 6104 may be trained on data in a single language, i.e. the target language. The speech recognition system 6101 is trained using speaker signals in the source language. The text to text translation system is trained using corresponding text signals in the source and target languages.

However, it is also possible to train the speech synthesis system 100 and speaker characteristic system 6104 for multiple target languages. In this case, the text to text translation system 6102 would also need to be trained on the multiple target languages. The speech recognition system 6101 and text to text translation systems may also be trained for multiple source languages.

In addition to speaker vectors, a target language vector 115 is also incorporated into the speech synthesis system 100. It is combined, for example through simple addition (if they are of the same dimensionality) or concatenation, with the speaker vector 113 to form the characteristic vector. This gives the speech synthesis module 100 the ability to output two or more different target languages using the corresponding language characteristic. In this case, the characteristic vector comprises information specific to the speaker and information specific to the language.

During operation, the user decides which language they wish to output, i.e. they select a target language from two or more supported target languages. Thus during operation of the system, the user selects the output language they wish to have, and the corresponding language code will be fed into the system. The corresponding language vector is found in a stored look-up table. The speaker vector is generated in the same manner as has been described above. The speaker vector is then combined with the target language vector to give the characteristic vector, by concatenating the vectors for example.

The language vectors 115 are learned during the training stage and stored in a look-up table for use during operation. The training for the speech synthesis system 103 therefore incorporates an additional language ID, which in turn corresponds to a language characteristic 115, and uses datasets of more than one language. Training is possible because all of the text 112 from each language is decomposed into a phone sequence 116, where the set of possible phones is language independent. Each language in the training data set has a corresponding language vector 115. For each segment of speech corresponding to the same language, the same language vector 115 is used, regardless of which speaker is speaking. Since different segments of speech corresponding to the different speakers will have the same language vector, the language vector is independent of the text/word or speaker information. The language characteristics are trainable parameters. the language vector may be learnt in the same way as described above for the speaker vectors, however its vectors are far more common than any single speaker vector, since many speakers belong in the same language. During training in a batch, the gradient update to a language vector is obtained through averaging the update for all utterances within the batch that is of the same language, even if each utterance may be of a different speaker.

This means through many iterations the language vectors will be trained to encapsulate the common characteristics from all the utterances of that language from different speakers, and emphasise the differences between different languages. Meanwhile, the speaker characteristic vectors for each speaker will be trained to emphasise the differences of the speaker characteristics, but with a minimised influence from the language that the speaker speaks, since the language information can be obtained through the language characteristics.

Optionally, the language vector is changed instead of, or as well as, the speaker vector and/or the input phone sequence, between the first and second stages of the method. For example, in the first stage of the method, a first input comprising a first phone sequence and a first characteristic vector is taken. The model outputs a first output data sequence, a first part of the model generating an intermediate state comprising information relating to an alignment relationship between the first input data sequence and the first output data sequence, the intermediate state being used in the model to generate the first output data sequence. The first input further comprises a first characteristic vector, wherein the first characteristic vector comprises a set of features corresponding to a first speaker and a set of features corresponding to a first language.

In the second stage of the method, the first part of the model is then replaced with the stored intermediate state, and a second input comprising the first input data sequence is taken as input into the modified model, the modified model outputting a second output data sequence using the intermediate state. The second input further comprises a second characteristic vector, wherein the second characteristic vector comprises the set of features corresponding to the first speaker and a modified set of language features. For example, the set of language features may be perturbed as has been described previously. Alternatively, a different set of language features, corresponding to a second different language may be used.

By changing the language vector to that for a different language, the output speech may be modified to include an accent. For example, when a Spanish language vector is used to produce an English sentence, it sounds like the speaker is speaking English with a Spanish accent.

Applying small perturbations to the language vector (in a similar manner as has been described above in relation to the speaker vector) could be used to improve the alignment robustness. a speaker vector comprising a number of values, each corresponding to a feature, is generated by the speaker characteristic adaptation module 104 and then used directly in the speech synthesis module 103. However, it is also possible to generate a probability distribution corresponding to each feature in the speaker vector using the speaker characteristic adaptation module 104. A speaker vector is then generated from the probability distribution, and used in the speech synthesis module 103. the speaker characteristic vector 113 corresponds to an input sentence utterance 110. In other words, there is a single vector of values (or probability distribution values) corresponding to each sentence. However, in an alternative example an input sentence utterance 110 is not represented by a single speaker vector or single probability distribution, but by a sequence of vectors (or probability distributions) corresponding to each input word in the sentence.

Timing information may be generated at the speech recognition stage 6101 and used to combine the output speech segments. Additionally or alternatively, the timing information may be inputted into the speech synthesis stage 100, and used to modify the duration of the output speech segments. In particular, the timing information may be taken as input to the vocoder for example, and used to control re-sampling of the generated speech segments.

For example, the timing information may indicate the duration of the input speech segment (for example it may indicate start and end times of the segment). Where the duration of the output speech segment is determined to be longer than the duration of the input speech segment, a down-sampling process may be performed at the Vocoder to reduce the number of output audio frames. A Fourier method is an example of a method used for re-sampling. A Fourier method involves transforming the data to the frequency domain, deleting components, and transforming back to the time domain to down sample. For example, deleting a number of the highest frequency components can be used to down-sample.

Where the duration of the output speech segment is determined to be shorter than the duration of the input speech segment, an up-sampling process may be performed at the Vocoder to increase the number of output audio frames. The up-sampling process may comprise interpolation of the original frames, or zero-padding for example. A Fourier method involving transforming the data into the Fourier domain, adding high frequency components with zero value, and then transforming back to the time-domain can be used to up-sample. the novel methods and apparatus described herein may be realised in a variety of other forms; furthermore, various omissions, substitutions and changes in the form of methods and apparatus described herein may be made.

## Claims

1. A computer implemented method of sequence to sequence data processing, comprising:
inputting a first input comprising a first input data sequence (101) into a model (100), the model (100) outputting a first output data sequence, a first part of the model generating an intermediate state (102, 103) comprising information relating to an alignment relationship between the first input data sequence (101) and the first output data sequence, the intermediate state (102, 103) being used in the model (100) to generate the first output data sequence, wherein the first input data sequence (101) comprises a sequence of text related units, and the first output data sequence comprises a sequence representing audio frames;
storing the intermediate state (102, 103), wherein the method is **characterised by**;
modifying the model (100) to replace the first part with the stored intermediate state; and
inputting a second input comprising a second input data sequence into the modified model, the modified model outputting a second output data sequence using the intermediate state (102, 103), wherein the first input data sequence (101) has the same length as the second input data sequence and wherein the first input has the same dimensions as the second input, and wherein the second input data sequence comprises a sequence of text related units, and the second output data sequence comprises a sequence representing audio frames.

2. The method according to claim 1 the first part of the model (100) comprises a first trained algorithm, and wherein the first trained algorithm is configured to generate a first set of parameters representing an alignment relationship between the first input data sequence (101) and the first output data sequence, and wherein modifying the model (100) comprises replacing the first trained algorithm with the stored first set of parameters (102).

3. The method according to claim 1 or 2, wherein the first trained algorithm is an attention mechanism.

4. The method according to any preceding claim, wherein the first input further comprises a first characteristic vector (106) and the second input further comprises a second characteristic vector (202).

5. The method according to claim 4, wherein the first characteristic vector (106) comprises a set of features corresponding to a first speaker and the second characteristic vector (202) comprises a set of features corresponding to a second speaker.

6. The method according to any preceding claim, wherein an input to the first part of the model (100) for a current time step comprises information generated from a previous time step.

7. The method according to claim 2, wherein an input to the first part of the model (100) for a current time step comprises information generated from a previous time step, wherein the model (100) further comprises a first neural network, and wherein the first trained algorithm is configured to:
for a current time step:
receive the output of the first neural network for one or more previous time steps, wherein the first set of parameters for the current time step is generated using the output of the first trained algorithm;
wherein the model is further configured to:
for a current time step:
generate a weighted combination of the text related units, wherein the weights are generated from the output of the first trained algorithm for the current time step;
wherein the input to the first neural network is generated from the weighted combination.

8. The method according to any preceding claim, further comprising:
inputting the second input into the model (100) comprising the first part, the model outputting a third output data sequence (201);
identifying that the second input is a candidate for improving alignment.

9. The method according to claim 8, wherein identifying that the second input is a candidate for improving alignment comprises detecting a fault in the alignment relationship between the second input data sequence and the third output data sequence (201).

10. The method according to claim 9, wherein detecting a fault comprises:
extracting a set of parameters generated by the first trained algorithm when the second input data sequence is inputted, the set of parameters representing an alignment relationship between the second input data sequence and the third output data sequence (201);
inputting features generated from the set of parameters into a fault detection classifier.

11. A carrier medium comprising computer readable code configured to cause a computer to perform a method according to any preceding claim.

12. A system (1) for sequence to sequence data processing, comprising:
an input (15);
an output (17);
a memory (7); and
a processor (3) configured to:
input a first input comprising a first input data sequence (101) into a model (100), the model (100) outputting a first output data sequence, a first part of the model (100) generating an intermediate state (102, 103) comprising information relating to an alignment relationship between the first input data sequence (101) and the first output data sequence, the intermediate state (102, 103) being used in the model (100) to generate the first output data sequence, wherein the first input data sequence (101) comprises a sequence of text related units and the first output data sequence comprises a sequence representing audio frames;
store the intermediate state (102, 103) in the memory (7), wherein the system (1) is **characterised by** the processor (3) being further configured to:
modify the model (100) to replace the first part with the stored intermediate state (102, 103);
input a second input comprising a second input data sequence into the modified model (100), the modified model (100) outputting a second output data sequence using the intermediate state (102, 103), wherein the first input data sequence (101) has the same length as the second input data sequence and wherein the first input has the same dimensions as the second input, and wherein, the second input data sequence comprises a sequence of text related units, and the second output data sequence comprises a sequence representing audio frames.

## Patentansprüche

1. Computerimplementiertes Verfahren zur Folge-zu-Folge-Datenverarbeitung, umfassend:
Eingeben einer ersten Eingabe, die eine erste Eingabedatenfolge (101) umfasst, in ein Modell (100), wobei das Modell (100) eine erste Ausgabedatenfolge ausgibt, wobei ein erster Teil des Modells einen Zwischenzustand (102, 103) erzeugt, der Informationen in Bezug auf eine Ausrichtungsbeziehung zwischen der ersten Eingabedatenfolge (101) und der ersten Ausgabedatenfolge umfasst, wobei der Zwischenzustand (102, 103) in dem Modell (100) verwendet wird, um die erste Ausgabedatenfolge zu erzeugen, wobei die erste Eingabedatenfolge (101) eine Folge von textbezogenen Einheiten umfasst und die erste Ausgabedatenfolge eine Folge umfasst, die Audio-Rahmen darstellt;
Speichern des Zwischenzustands (102, 103), wobei das Verfahren **gekennzeichnet ist durch**:
Modifizieren des Modells (100), um den ersten Teil mit dem gespeicherten Zwischenzustand zu ersetzen; und
Eingeben einer zweiten Eingabe, die eine zweite Eingabedatenfolge umfasst, in das modifizierte Modell, wobei das modifizierte Modell unter Verwendung des Zwischenzustands (102, 103) eine zweite Ausgabedatenfolge ausgibt, wobei die erste Eingabedatenfolge (101) dieselbe Länge wie die zweite Eingabedatenfolge aufweist und wobei die erste Eingabe dieselben Dimensionen wie die zweite Eingabe aufweist, und wobei die zweite Eingabedatenfolge eine Folge von textbezogenen Einheiten umfasst und die zweite Ausgabedatenfolge eine Folge umfasst, die Audio-Rahmen darstellt.

2. Verfahren nach Anspruch 1, wobei der erste Teil des Modells (100) einen ersten trainierten Algorithmus umfasst und wobei der erste trainierte Algorithmus dafür konfiguriert ist, eine erste Menge von Parametern zu erzeugen, die eine Ausrichtungsbeziehung zwischen der ersten Eingabedatenfolge (101) und der ersten Ausgabedatenfolge darstellen, und wobei das Modifizieren des Modells (100) umfasst: Ersetzen des ersten trainierten Algorithmus mit der gespeicherten ersten Menge von Parametern (102).

3. Verfahren nach Anspruch 1 oder 2, wobei der erste trainierte Algorithmus ein Aufmerksamkeitsmechanismus ist.

4. Verfahren nach einem der vorhergehenden Ansprüche, wobei die erste Eingabe ferner einen ersten charakteristischen Vektor (106) umfasst und die zweite Eingabe ferner einen zweiten charakteristischen Vektor (202) umfasst.

5. Verfahren nach Anspruch 4, wobei der erste charakteristische Vektor (106) eine Menge von Merkmalen umfasst, die einem ersten Sprecher entsprechen, und der zweite charakteristische Vektor (202) eine Menge von Merkmalen umfasst, die einem zweiten Sprecher entsprechen.

6. Verfahren nach einem der vorhergehenden Ansprüche, wobei eine Eingabe in den ersten Teil des Modells (100) für einen aktuellen Zeitschritt Informationen umfasst, die aus einem vorherigen Zeitschritt erzeugt wurden.

7. Verfahren nach Anspruch 2, wobei eine Eingabe in den ersten Teil des Modells (100) für einen aktuellen Zeitschritt Informationen umfasst, die aus einem vorherigen Zeitschritt erzeugt wurden, wobei das Modell (100) ferner ein erstes neuronales Netz umfasst, und wobei der erste trainierte Algorithmus dafür konfiguriert ist:
für einen aktuellen Zeitschritt:
die Ausgabe des ersten neuronalen Netzes für einen oder mehrere vorherige Zeitschritte zu empfangen, wobei die erste Menge von Parametern für den aktuellen Zeitschritt unter Verwendung der Ausgabe des ersten trainierten Algorithmus erzeugt wird;
wobei das Modell ferner dafür konfiguriert ist:
für einen aktuellen Zeitschritt:
eine gewichtete Kombination der textbezogenen Einheiten zu erzeugen, wobei die Gewichtungen aus der Ausgabe des ersten trainierten Algorithmus für den aktuellen Zeitschritt erzeugt werden;
wobei die Eingabe in das erste neuronale Netz aus der gewichteten Kombination erzeugt wird.

8. Verfahren nach einem der vorhergehenden Ansprüche, ferner umfassend:
Eingeben der zweiten Eingabe in das Modell (100), das den ersten Teil umfasst, wobei das Modell eine dritte Ausgabedatenfolge (201) ausgibt;
Erkennen, dass die zweite Eingabe ein Kandidat zum Verbessern der Ausrichtung ist.

9. Verfahren nach Anspruch 8, wobei das Erkennen, dass die zweite Eingabe ein Kandidat zum Verbessern der Ausrichtung ist, umfasst: Ermitteln eines Fehlers in der Ausrichtungsbeziehung zwischen der zweiten Eingabedatenfolge und der dritten Ausgabedatenfolge (201).

10. Verfahren nach Anspruch 9, wobei das Ermitteln eines Fehlers umfasst:
Extrahieren einer Menge von Parametern, die durch den ersten trainierten Algorithmus erzeugt werden, wenn die zweite Eingabedatenfolge eingegeben wird, wobei die Menge von Parametern eine Ausrichtungsbeziehung zwischen der zweiten Eingabedatenfolge und der dritten Ausgabedatenfolge (201) darstellt;
Eingeben von Merkmalen, die aus der Menge von Parametern erzeugt werden, in einen Fehlerermittlungsklassifikator.

11. Trägermedium, computerlesbaren Code umfassend, der dafür konfiguriert ist zu bewirken, dass ein Computer ein Verfahren nach einem der vorhergehenden Ansprüche durchführt.

12. System (1) zur Folge-zu-Folge-Datenverarbeitung, umfassend:
einen Eingang (15);
einen Ausgang (17);
einen Speicher (7); und
einen Prozessor (3), der dafür konfiguriert ist:
eine erste Eingabe, die eine erste Eingabedatenfolge (101) umfasst, in ein Modell (100) einzugeben, wobei das Modell (100) eine erste Ausgabedatenfolge ausgibt, wobei ein erster Teil des Modells (100) einen Zwischenzustand (102, 103) erzeugt, der Informationen in Bezug auf eine Ausrichtungsbeziehung zwischen der ersten Eingabedatenfolge (101) und der ersten Ausgabedatenfolge umfasst, wobei der Zwischenzustand (102, 103) in dem Modell (100) verwendet wird, um die erste Ausgabedatenfolge zu erzeugen, wobei die erste Eingabedatenfolge (101) eine Folge von textbezogenen Einheiten umfasst und die erste Ausgabedatenfolge eine Folge umfasst, die Audio-Rahmen darstellt;
den Zwischenzustand (102, 103) im Speicher (7) zu speichern, wobei das System (1) **dadurch gekennzeichnet ist, dass** der Prozessor (3) ferner dafür konfiguriert ist:
das Modell (100) zu modifizieren, um den ersten Teil mit dem gespeicherten Zwischenzustand (102, 103) zu ersetzen;
eine zweite Eingabe, die eine zweite Eingabedatenfolge umfasst, in das modifizierte Modell (100) einzugeben, wobei das modifizierte Modell (100) unter Verwendung des Zwischenzustands (102, 103) eine zweite Ausgabedatenfolge ausgibt, wobei die erste Eingabedatenfolge (101) dieselbe Länge wie die zweite Eingabedatenfolge aufweist und wobei die erste Eingabe dieselben Dimensionen wie die zweite Eingabe aufweist, und wobei die zweite Eingabedatenfolge eine Folge von textbezogenen Einheiten umfasst und die zweite Ausgabedatenfolge eine Folge umfasst, die Audio-Rahmen darstellt.

## Revendications

1. Procédé mis en œuvre par ordinateur de traitement de données séquence à séquence, comprenant :
l'entrée d'une première entrée comprenant une première séquence de données d'entrée (101) dans un modèle (100), le modèle (100) émettant en sortie une première séquence de données de sortie, une première partie du modèle générant un état intermédiaire (102, 103) comprenant des informations se rapportant à une relation d'alignement entre la première séquence de données d'entrée (101) et la première séquence de données de sortie, l'état intermédiaire (102, 103) étant utilisé dans le modèle (100) pour générer la première séquence de données de sortie, dans lequel la première séquence de données d'entrée (101) comprend une séquence d'unités relatives au texte, et la première séquence de données de sortie comprend une séquence représentant des trames audio ;
le stockage de l'état intermédiaire (102, 103), dans lequel le procédé est **caractérisé par** :
la modification du modèle (100) pour remplacer la première partie par l'état intermédiaire stocké ; et
l'entrée d'une seconde entrée comprenant une seconde séquence de données d'entrée dans le modèle modifié, le modèle modifié émettant en sortie une deuxième séquence de données de sortie en utilisant l'état intermédiaire (102, 103), dans lequel la première séquence de données d'entrée (101) présente la même longueur que la seconde séquence de données d'entrée et dans lequel la première entrée présente les mêmes dimensions que la seconde entrée, et dans lequel la seconde séquence de données d'entrée comprend une séquence d'unités relatives au texte, et la deuxième séquence de données de sortie comprend une séquence représentant des trames audio.

2. Procédé selon la revendication 1, dans lequel la première partie du modèle (100) comprend un premier algorithme entraîné, et dans lequel le premier algorithme entraîné est configuré pour générer un premier ensemble de paramètres représentant une relation d'alignement entre la première séquence de données d'entrée (101) et la première séquence de données de sortie, et dans lequel la modification du modèle (100) comprend le remplacement du premier algorithme entraîné par le premier ensemble de paramètres stocké (102).

3. Procédé selon la revendication 1 ou 2, dans lequel le premier algorithme entraîné est un algorithme d'attention.

4. Procédé selon l'une quelconque des revendications précédentes, dans lequel la première entrée comprend en outre un premier vecteur de caractéristiques (106) et la seconde entrée comprend en outre un second vecteur de caractéristiques (202).

5. Procédé selon la revendication 4, dans lequel le premier vecteur de caractéristiques (106) comprend un ensemble de caractéristiques correspondant à un premier locuteur et le second vecteur de caractéristiques (202) comprend un ensemble de caractéristiques correspondant à un second locuteur.

6. Procédé selon l'une quelconque des revendications précédentes, dans lequel une entrée sur la première partie du modèle (100) pour un pas temporel actuel comprend des informations générées à partir d'un pas temporel précédent.

7. Procédé selon la revendication 2, dans lequel une entrée sur la première partie du modèle (100) pour un pas temporel actuel comprend des informations générées à partir d'un pas temporel précédent, dans lequel le modèle (100) comprend en outre un premier réseau neuronal, et dans lequel le premier algorithme entraîné est configuré pour :
pour un pas temporel actuel :
recevoir la sortie du premier réseau neuronal pour un ou plusieurs pas temporels précédents, dans lequel le premier ensemble de paramètres pour le pas temporel actuel est généré en utilisant la sortie du premier algorithme entraîné ;
dans lequel le modèle est en outre configuré pour :
pour un pas temporel actuel :
générer une combinaison pondérée des unités relatives au texte, dans lequel les pondérations sont générés à partir de la sortie du premier algorithme entraîné pour le pas temporel actuel ;
dans lequel l'entrée sur le premier réseau neuronal est générée à partir de la combinaison pondérée.

8. Procédé selon l'une quelconque des revendications précédentes, comprenant en outre :
l'entrée de la seconde entrée dans le modèle (100) comprenant la première partie, le modèle émettant en sortie une troisième séquence de données de sortie (201) ;
l'identification du fait que la seconde entrée est un candidat pour améliorer l'alignement.

9. Procédé selon la revendication 8, dans lequel l'identification du fait que la seconde entrée est un candidat pour améliorer l'alignement comprend la détection d'un défaut dans la relation d'alignement entre la seconde séquence de données d'entrée et la troisième séquence de données de sortie (201).

10. Procédé selon la revendication 9, dans lequel la détection d'un défaut comprend :
l'extraction d'un ensemble de paramètres générés par le premier algorithme entraîné lorsque la seconde séquence de données d'entrée est entrée, l'ensemble de paramètres représentant une relation d'alignement entre la seconde séquence de données d'entrée et la troisième séquence de données de sortie (201) ;
l'entrée de caractéristiques générées à partir de l'ensemble de paramètres dans un classificateur de détection de défauts.

11. Support comprenant du code lisible par ordinateur configuré pour amener un ordinateur à réaliser un procédé selon l'une quelconque des revendications précédentes.

12. Système (1) pour le traitement de données séquence à séquence, comprenant :
une entrée (15) ;
une sortie (17) ;
une mémoire (7) ; et
un processeur (3) configuré pour :
entrer une première entrée comprenant une première séquence de données d'entrée (101) dans un modèle (100), le modèle (100) émettant en sortie une première séquence de données de sortie, une première partie du modèle (100) générant un état intermédiaire (102, 103) comprenant des informations se rapportant à une relation d'alignement entre la première séquence de données d'entrée (101) et la première séquence de données de sortie, l'état intermédiaire (102, 103) étant utilisé dans le modèle (100) pour générer la première séquence de données de sortie, dans lequel la première séquence de données d'entrée (101) comprend une séquence d'unités relatives au texte, et la première séquence de données de sortie comprend une séquence représentant des trames audio ;
stocker l'état intermédiaire (102, 103) dans la mémoire (7), dans lequel le système (1) est **caractérisé en ce que** le processeur (3) est en outre configuré pour :
modifier le modèle (100) pour remplacer la première partie par l'état intermédiaire stocké (102, 103) ; et
entrer une seconde entrée comprenant une seconde séquence de données d'entrée dans le modèle modifié (100), le modèle modifié (100) émettant en sortie une deuxième séquence de données de sortie en utilisant l'état intermédiaire (102, 103), dans lequel la première séquence de données d'entrée (101) présente la même longueur que la seconde séquence de données d'entrée et dans lequel la première entrée présente les mêmes dimensions que la seconde entrée, et dans lequel la seconde séquence de données d'entrée comprend une séquence d'unités relatives au texte, et la deuxième séquence de données de sortie comprend une séquence représentant des trames audio.
